# EUROPEAN PATENT SPECIFICATION

(11) **EP 4 305 616 B1**
(45) Date of publication and mention of the grant of the patent: **17.09.2025**
(21) Application number: 21714301.5
(22) Date of filing: 12.03.2021
(51) Int. Cl.: G10L 15/28, G06F 3/16, G10L 15/08

(54) **REDUCED-LATENCY SPEECH PROCESSING**
SPRACHVERARBEITUNG MIT REDUZIERTER LATENZ
TRAITEMENT DE LA PAROLE À LATENCE RÉDUITE

(43) Date of publication of application: 17.01.2024
(73) Proprietor: QUALCOMM INCORPORATED, San Diego, California 92121-1714 (US)
(72) Inventor: DONG, Xiaoxia, San Diego, California 92121-1714 (US); SHEYNBLAT, Leonid, San Diego, California 92121-1714 (US); SUN, Zhijia, San Diego, California 92121-1714 (US); CHEN, Xin, San Diego, California 92121-1714 (US); WONG, Sabrina Chung Man, San Diego, California 92121-1714 (US)
(74) Representative: Reddie & Grose LLP
(86) International application number: PCT/CN2021/080471
(87) International publication number: WO 2022/188152

(56) References cited:
- EP-A1- 3 281 200
- JP-A- 2017 520 012
- US-A1- 2018 012 593
- US-A1- 2021 055 778

## Description

### I. FIELD

The present disclosure is generally related to reduced-latency speech processing.

### II. DESCRIPTION OF RELATED ART

Advances in technology have resulted in smaller and more powerful computing devices. For example, there currently exist a variety of portable personal computing devices, including wireless telephones such as mobile and smart phones, tablets and laptop computers that are small, lightweight, and easily carried by users. These devices can communicate voice and data packets over wireless networks. Further, many such devices incorporate additional functionality such as a digital still camera, a digital video camera, a digital recorder, audio recording, audio and/or video conferencing, and an audio file player. Also, such devices can process executable instructions, including software applications, such as a web browser application, that can be used to access the Internet.

It has become increasingly common for such devices to include speech recognition applications. For example, voice assistant applications that use speech recognition are widely used in devices, such as mobile phones, headphones, smart speakers, vehicles, etc. As voice assistant applications improve, the speech detection models and other related software of the voice assistant applications grow in complexity, leading to higher processing requirements and greater latency. In some instances, the latency increase may be sufficient to be detectable by the user, which negatively impacts the user experience associated with using the voice assistant application. For example, a large latency increase may be experienced when a voice assistant application is in a sleep or standby state and is awakened responsive to utterance of a keyword.
US 2021/0055778 A1 discloses a low-power keyword spotting system. A processor comprises a first core and a second core, wherein the first core is a low-power processing core and the second core is a high-power processing core, when the first core determines the presence of at least one of a plurality of keywords in the acoustic signal the acoustic signal is provided to the second core for further processing. In an aspect, the further processing comprises performing keyword verification.
US 2018/0012593 A1 discloses keyword detection modeling.
WO 2016/162701 A1 discloses arrangements for speech recognition.
WO 2015/164047 A discloses method for activating an application by speech input, in which loading of a voice assistant application may be completed before the voice activation unit verifies whether to activate the voice assistant application based on a buffered portion of an input sound stream.

### III. SUMMARY

The invention is defined in the independent claims. Optional features are set out in the dependent claims.

Other aspects, advantages, and features of the present disclosure will become apparent after review of the entire application, including the following sections: Brief Description of the Drawings, Detailed Description, and the Claims.

### IV. BRIEF DESCRIPTION OF THE DRAWINGS

FIG. 1 is a block diagram of an example of a system that is configured to reduce latency following an indication of keyword detection.
FIG. 2 is a block diagram of an example of a device that is configured to reduce latency following an indication of keyword detection.
FIG. 3 is a block diagram of an example of a device that is configured to reduce latency following an indication of keyword detection.
FIG. 4 is a block diagram of an example of a device that is configured to reduce latency following an indication of keyword detection.
FIG. 5 is a block diagram of an example of a system, including two or more devices, that is configured to reduce latency following an indication of keyword detection.
FIG. 6A, 6B, and 6C are diagrams that illustrate an example of operations performed by the scheduler to reduce latency following an indication of keyword detection.
FIG. 7A, 7B, and 7C are diagrams that illustrate an example of operations performed by the scheduler to reduce latency following an indication of keyword detection.
FIG. 8A, 8B, and 8C are diagrams that illustrate an example of operations performed by the scheduler to reduce latency following an indication of keyword detection.
FIG. 9A, 9B, and 9C are diagrams that illustrate an example of operations performed by the scheduler to reduce latency following an indication of keyword detection.
FIG. 10A, 10B, and 10C are diagrams that illustrate an example of operations performed by the scheduler to reduce latency following an indication of keyword detection.
FIG. 11 illustrates an integrated circuit that is configured to reduce latency following an indication of keyword detection.
FIG. 12 illustrates a mobile device that is configured to reduce latency following an indication of keyword detection.
FIG. 13 illustrates ear buds that are configured to reduce latency following an indication of keyword detection.
FIG. 14 illustrates a headset that is configured to reduce latency following an indication of keyword detection.
FIG. 15 illustrates a wearable device that is configured to reduce latency following an indication of keyword detection.
FIG. 16 illustrates a voice-controlled speaker system that is configured to reduce latency following an indication of keyword detection.
FIG. 17 illustrates a camera that is configured to reduce latency following an indication of keyword detection.
FIG. 18 illustrates a headset that is configured to reduce latency following an indication of keyword detection.
FIG. 19 illustrates an aerial device that is configured to reduce latency following an indication of keyword detection.
FIG. 20 illustrates a vehicle that is configured to reduce latency following an indication of keyword detection.
FIG. 21 is a flow chart illustrating aspects of an example of a method of reducing latency following an indication of keyword detection.
FIG. 22 is a flow chart illustrating aspects of an example of a method of reducing latency following an indication of keyword detection.
FIG. 23 is a flow chart illustrating aspects of an example of a method of reducing latency following an indication of keyword detection.
FIG. 24 is a flow chart illustrating aspects of an example of a method of reducing latency following an indication of keyword detection.
FIG. 25 is a flow chart illustrating aspects of an example of a method of reducing latency following an indication of keyword detection.
FIG. 26 is a flow chart illustrating aspects of an example of a method of reducing latency following an indication of keyword detection.
FIG. 27 is a flow chart illustrating aspects of an example of a method of reducing latency following an indication of keyword detection.
FIG. 28 is a flow chart illustrating aspects of an example of a method of reducing latency following an indication of keyword detection.
FIG. 29 is a flow chart illustrating aspects of an example of a method of reducing latency following an indication of keyword detection.
FIG. 30 is a block diagram of a particular illustrative example of a device that is operable to reduce latency following an indication of keyword detection according to a particular aspect.

### V. DETAILED DESCRIPTION

In a particular aspect, voice assistant operations are performed in multiple stages to conserve power and computing resources, and execution of the stages and/or resources used to execute the stages is controlled in a manner that reduces latency without significantly increasing power demands. In some implementations, a staged approach is used to separate execution of complex speech recognition models that process natural language speech from less complex keyword detection models. Using such an approach, the complex speech recognition models can remain in a low-power state (e.g., in standby, asleep, off, or another low-power state) until a keyword is detected. For example, a first stage of the staged approach may include a first stage keyword detector that runs on a low-power processor, such as a digital signal processor (DSP) or an application specific integrated circuit (ASIC). In this example, the first stage keyword detector monitors audio data from one or more microphones to detect an utterance that includes a keyword. In this context, a "keyword" is a word or phrase use to alert the voice assistant that a command or query is coming. When the first stage keyword detector indicates that a keyword is detected, more complex and resource intensive portions of the voice assistant are initiated.

In a particular aspect, the first stage keyword detector uses a relatively simple speech reignition model and may generate more false alarms for keyword detection than desired. To address this issue, some implementations use a second stage keyword detection with a more complex algorithm to confirm keyword detection before executing a full natural language voice assistant application. The second stage keyword detector may be executed at a low-power processor (e.g., a DSP or ASIC), or may be executed at one or more processing cores of an application processor (e.g., a central processing unit (CPU) or a graphics processing unit (GPU), or another general-purpose processor). As one example, the first stage keyword detector and the second stage keyword detector are embedded system components that operate below a higher level operating system. In another example, the first stage keyword detector is an embedded system component and the second stage keyword detector is a component or aspect of the higher level operating system. In yet another example, the first stage keyword detector is an embedded system component and the second stage keyword detector is a part of an application (e.g., a voice service or voice assistant application) that operates within the higher level operating system.

When keyword detection is confirmed by the second stage, a full voice assistant application is used to perform a voice assistant operation based on a voice command or inquiry that includes or follows the keyword. If the voice assistant application is in a low-power mode (e.g., asleep) when the keyword is detected, there can be significant delay between detecting the keyword and when the voice assistant application is ready to receive and process speech. This delay, referred to herein as latency of the voice service or voice assistant application, can be longer for more complex speech recognition models. Thus, while more complex speech recognition models can lead to improved accuracy of speech recognition, the more complex speech recognition models can also increase latency, which is detrimental to the user experience.

At least a portion of the latency increase for complex speech recognition models is due to delaying execution of the speech recognition model on the most powerful available processing cores in order to conserve power, especially for portable, battery-operated devices. Many such devices include several different types of processing cores. As an example, the different types of processing cores can include lower-power processing cores and higher-power processing cores. In this example, a lower-power processing core has lower power demand than a higher-power processing core, but the lower-power processing core also has reduced performance in terms of various metrics. To illustrate, relative to the higher-power processing core, the lower power processing core may have a slower clock cycle, may execute fewer instructions per second, may perform fewer operations per second, etc.

When a device has multiple processing cores, the device may use a scheduler to control which processes are executed on each processing core. In some implementations, the scheduler is configured to reserve one or more processing cores (referred to herein as "reserved processing cores") for particular types of processes. In such implementations, the reserved processing cores are reserved for use by processes where the improved performance of a higher-power processing core is needed or desirable, despite the resulting increased power demand. In some such implementations, the scheduler is configured to use other processing cores (referred to herein as "additional processing cores" or "non-reserved processing cores") for any process but may schedule particular processes ahead of others due to scheduling priority, etc. As one example, the scheduler may assign a process of a foreground application to a reserved processing core or to one of the non-reserved processing cores but may assign a process of a background application only to one of the non-reserved processing cores.

In a particular aspect disclosed herein, latency of a voice service is decreased by decreasing the delay between detection of a keyword at the first stage keyword detector and execution of the speech recognition model on one or more reserved processing cores. For example, in some implementations, the latency is decreased by transitioning a processor (e.g., an application processor) from an idle state to a wake-up state and initiating a voice service prior to confirmation of keyword detection. In this example, a wake-up process is started based on the first stage keyword detector generating an indication of keyword detection. If a second stage keyword detector or the voice service determines that the keyword detection cannot be confirmed, the processor can be returned to an idle state. In contrast, if the second stage keyword detector or the voice service confirms the keyword detection, the voice service is ready to perform speech recognition operations sooner than if the processes of waking up the processor and initiating the voice service were delayed until after keyword detection was confirmed.

Based on a signal indicating a keyword detection by the first stage keyword detector and prior to confirmation of the keyword detection, a change of state is initiated to enable a voice service that is in a low-power mode to be scheduled for execution on one or more reserved processor cores. For example, the change of state to enable the voice service to be scheduled for execution on one or more reserved processor cores can include scheduling a process of the voice service for execution on the one or more reserved processor cores or instructing the scheduler to schedule a process of the voice service at one or more reserved processor cores. As another example, the change of state to enable the voice service to be scheduled for execution on one or more reserved processor cores can include setting or modifying a parameter (e.g., a scheduling parameter) that the scheduler uses to determine which processes are assigned to which processing core(s). To illustrate, the scheduler may maintain or have access to scheduling priority values associated with various applications or processes. In this illustrative example, the change of state can include elevating a scheduling priority value associated with the voice service or with a process of the voice service. As another example, the change of state to enable the voice service to be scheduled for execution on one or more reserved processor cores can include moving a process of the voice service from a background task to a foreground task. In this example, the scheduler may be configured to allow foreground tasks to use the reserved processing core(s) and may restrict background tasks from using the reserved processing core(s). As yet another example, the change of state to enable the voice service to be scheduled for execution on one or more reserved processor cores can include reassigning a process of a voice service from a first scheduling group to a second scheduling group. In this example, the scheduler may be configured to allow the second scheduling group to use the reserved processing core(s) and may restrict first scheduling group from using the reserved processing core(s). In still other examples, the scheduler uses more, fewer, or different scheduling parameters to assign processes to processing cores. In such examples, any one or more scheduling parameters that enable the scheduler to schedule the voice service for execution on one or more reserved processor cores can be set or modified based on a signal indicating a keyword detection by the first stage keyword detector and prior to confirmation of the keyword detection to reduce latency.

The change of state to enable the voice service to be scheduled for execution on one or more reserved processor cores includes changing one or more scheduling parameters associated with a different application or service (e.g., other than the voice service) and causing the voice service to inherit the one or more scheduling parameters. The change of state includes binding the voice service and a second stage keyword detector and setting or modifying a scheduling parameter associated with the second stage keyword detector. To illustrate, the scheduling priority of the second stage keyword detector can be elevated. As another illustrative example, the second stage keyword detector can be designated a foreground task.

In a particular aspect, changes made based on a signal indicating a keyword detection by the first stage keyword detector and prior to confirmation of the keyword detection are reset or revoked if the keyword detection is not confirmed. To illustrate, if a scheduling parameters associated with the voice service (or the second stage keyword detector) is change from a first value to a second value based on the signal indicating keywork detection, the scheduling parameter is changed from the second value back to the first value if the second stage keyword detector (or the voice service) disconfirms the keyword detection. Resetting the scheduling parameter in this manner disallows the voice service from executing on the reserved processor core(s). As another illustrative example, if an application processor is awakened from a sleep state based on the signal indicating keywork detection, the application processor is returned to the sleep state or shutdown if the second stage keyword detector (or the voice service) disconfirms the keyword detection. Thus, the various aspects disclosed herein significantly reduce latency without significantly increasing power demand.

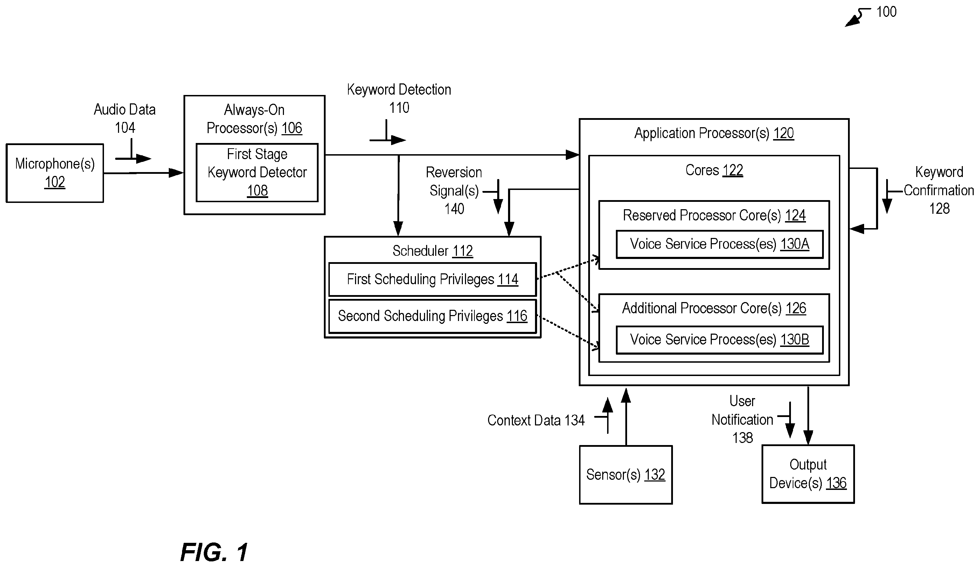

Particular aspects of the present disclosure are described below with reference to the drawings. In the description, common features are designated by common reference numbers. As used herein, various terminology is used for the purpose of describing particular implementations only and is not intended to be limiting of implementations. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more application processors ("application processors(s) 120" in FIG. 1), which indicates that in some implementations the system 100 includes a single application processor 120 and in other implementations the system 100 includes multiple application processors 120. For ease of reference herein, such features are generally introduced as "one or more" features and are subsequently referred to in the singular or optional plural (generally indicated by terms ending in "(s)") unless aspects related to multiple of the features are being described.

The terms "comprise," "comprises," and "comprising" are used herein interchangeably with "include," "includes," or "including." Additionally, the term "wherein" is used interchangeably with "where." As used herein, "exemplary" indicates an example, an implementation, and/or an aspect, and should not be construed as limiting or as indicating a preference or a preferred implementation. As used herein, an ordinal term (e.g., "," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to one or more of a particular element, and the term "plurality" refers to multiple (e.g., two or more) of a particular element.

As used herein, "coupled" may include "communicatively coupled," "electrically coupled," or "physically coupled," and may also (or alternatively) include any combinations thereof. Two devices (or components) may be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled may be included in the same device or in different devices and may be connected via electronics, one or more connectors, or inductive coupling, as illustrative, non-limiting examples. In some implementations, two devices (or components) that are communicatively coupled, such as in electrical communication, may send and receive electrical signals (digital signals or analog signals) directly or indirectly, such as via one or more wires, buses, networks, etc. As used herein, "directly coupled" refers to two devices that are coupled (e.g., communicatively coupled, electrically coupled, or physically coupled) without intervening components.

In the present disclosure, terms such as "determining," "calculating," "estimating," "shifting," "adjusting," etc. may be used to describe how one or more operations are performed. It should be noted that such terms are not to be construed as limiting and other techniques may be utilized to perform similar operations. Additionally, as referred to herein, "generating," "calculating," "estimating," "using," "selecting," "accessing," and "determining" may be used interchangeably. For example, "generating," "calculating," "estimating," or "determining" a parameter (or a signal) may refer to actively generating, estimating, calculating, or determining the parameter (or the signal) or may refer to using, selecting, or accessing the parameter (or signal) that is already generated, such as by another component or device.

FIG. 1 is a block diagram of an example of a system 100 that is configured to reduce latency following an indication of keyword detection. The system 100 includes one or more microphones 102, a first stage keyword detector 108, a scheduler 112, and one or more processors (e.g., application processor(s) 120 in FIG. 1) including multiple processing cores 122. In some implementations, the microphone(s) 102, the first stage keyword detector 108, the scheduler 112, and the application processor(s) 120 are integrated within a single device, such as a mobile device, a computer (e.g., a laptop, desktop, or tablet computer), a wearable electronic device, an internet-of-things device (e.g., a smart appliance, a smart speaker, a home automation system, etc.), a vehicle, or another device that is configured to recognize and respond to keywords and user speech. In other implementations, the microphone(s) 102, the first stage keyword detector 108, the scheduler 112, and the application processor(s) 120 are distributed among several devices that communicate via wired or wireless transmissions. For example, in some implementations, the microphone(s) 102 and the first stage keyword detector 108 are integrated within a first device, and the scheduler 112 and the application processor(s) 120 are integrated within a second device. In some examples of such implementations, the second device and the first device are co-located and communicate via short-range transmissions, such as via a universal serial bus (USB) connection or via Bluetooth^{®} communications (BLUETOOTH is a registered trademark of BLUETOOTH SIG, INC. of Kirkland, Washington, USA). In other examples of such implementations, the second device and the first device are remote from one another and communicate via long-range transmissions (such as via a cellular network or ethernet). To illustrate, the first device may include, correspond to, or be included within a portable user device (e.g., a mobile phone) and the second device may include, correspond to, or be included within a server computer of a voice assistant service.

In the example of FIG. 1, the first stage keyword detector 108 runs on one or more always-on processors 106. In this context, "always on" indicates that, under normal circumstances, the always-on processor(s) 106 is operational when the system 100 is operational. However, the always-on processor(s) 106 may be powered down when the system 100 is powered down. Further, a user setting of the system 100 may allow a user to turn off the always-on processor(s) 106 in certain circumstances (e.g., when the user does not wish to use a voice service). The always-on processor(s) 106 are generally low-power processors, such as application specific integrated circuits (ASICs), digital signal processors (DSPs) or other low-power integrated circuits. As such, the first stage keyword detector 108 is generally a relatively small model (e.g., as compared to a full natural-language model that may be used by a voice service). In this context, a "voice service" refers to an application or set of processes executable to respond to commands or inquiries provided via natural language speech (generally after a keyword is provided). The first stage keyword detector 108 may include or correspond to a hidden markov model, a universal speech model for independent speakers, a neural network, or another model that is configured to monitor audio data 104 from the microphone(s) 102 for utterances that include one or more keywords. The keyword is generally a single word, or a short phrase that is easy for the user to remember and ideally readily detectable using a relatively small model.

In some implementations, while the first stage keyword detector 108 listens for a keyword, other components of the system 100 can revert to a power-saving mode, such as a standby mode, a sleep mode, or a powered off mode. As used herein, the terms "power-saving mode", "standby mode", "sleep mode", and "low-power mode" are used interchangeably to indicate any mode or state in which a device or component consumes less power than when the device or component is in a normal operating mode. Further, in this context, a powered off mode indicates that the device or component is not powered. Additionally, or alternatively, while the first stage keyword detector 108 listens for a keyword, other components of the system 100 can perform operations unrelated to speech detection and speech recognition. For example, processes of a voice service (e.g., voice service process(es) 130A and 130B) of FIG. 1 are executed based on keyword detection 110 by the first stage keyword detector 108 and otherwise (e.g., absent the keyword detection 110) are dormant, powered off, or otherwise not executed.

The scheduler 112 is configured to assign processes to execute at particular ones of the processor cores 122. For example, the scheduler 112 may assign a first process of an application to run at a first core and a second process of the same application or of a different application to run at a second core. As used herein, an application can include multiple processes, and each process can include multiple tasks. In a particular implementation, the scheduler 112 is an embedded function of the system, e.g., the scheduler 112 operates at basic input/output system (BIOS) level. In other implementations, the scheduler 112 is a function of a high-order operating system, such as an Android^{®} operating system, an iOS^{®} operating system, a macOS^{®} operating system, a Windows^{®} operating system, or a Linux^{®} operating system (Android is a registered trademark of Google LLC of Mountain View, California, USA; iOS is a trademark of Apple Inc. of Cupertino, California, USA-used under license from CISCO Technology, INC. of San Jose, California, USA; macOS is a registered trademark of Apple Inc. of Cupertino, California, USA; Windows is a registered trademark of Microsoft Corporation of Seattle, Washington, USA; Linux is a registered trademark of Linus Torvalds). In still other implementations, the scheduler 112 is an application that operates within a framework of the high-order operating system.

The scheduler 112 assigns processes to the processor cores 122 based on scheduling privileges (e.g., first scheduling privileges 114 and second scheduling privileges 116 in FIG. 1) associated with the processes. As used herein, "scheduling privileges" is an overarching term that refers to any mechanism or algorithm for prioritizing assignment of processes to processor cores 122. The scheduling privileges 114 and 116 are allocated to processes in different ways depending on the particular implementation. For example, the scheduling privileges 114 and 116 may be assigned based on priority values or other scheduling parameter values associated with each process, based on whether a process is a foreground process or a background process, based on a scheduling group to which the process is assigned, based on other factors, or based on combinations of two or more of the above.

In some implementations, the processing cores 122 of the application processor(s) 120 include one or more reserved processor cores 124 and one or more additional processor cores 126. In this context, a "reserved processor core" refers to a core that can only be used by processes that have particular scheduling privileges. For example, in FIG. 1, the scheduler 112 can assign processes with the first scheduling privileges 114 to the reserved processor core(s) 124 or the additional processor core(s) 126. In contrast, the scheduler 112 can assign processes with the second scheduling privileges 116 only to the additional processor core(s) 126. In some implementations, scheduling privileges are assigned dynamically; thus, a process may have the first scheduling privileges 114 at a first time and the second scheduling privileges 116 at a second time as circumstances change. Generally, the reserved processor core(s) 124 are higher performance cores than the additional processor core(s) 126, in which case the reserved processor core(s) 124 may have greater power demand than the additional processor core(s) 126. As a result, reserving the reserved processor core(s) 124 for particular processes conserves power.

FIG. 1 also illustrates one or more sensors 132 coupled to the application processor(s) 120. In a particular implementation, the sensor(s) 132 are configured to generate context data 134 that can be used by the voice service process(es) 130 to process speech input received via the audio data 104. In some implementations, the context data 134 is only accessible to approved applications or processes, in which case, the context data 134 may be accessible to the voice service process 130A due to the scheduling privileges associated with the voice service process(es) 130A, due to the voice service process(es) 130A executing on the reserved processor core(s) 124, or due to factors that lead to assignment of particular scheduling privileges to the voice service process(es) 130A. For example, the context data 134 may be accessible to foreground applications, and the voice service process(es) 130A may be assigned the first scheduling privileges due to the voice service being designated a foreground application.

FIG. 1 also illustrates one or more output devices 136 coupled to the application processor(s) 120. In a particular implementation, the output device(s) 136 are configured to generate user perceivable output of a user notification 138. The output can include or correspond to a sound, a vibration or other haptic output, a visual output (e.g., a light, text, an icon, etc.). In some implementations, the particularly output corresponding to the user notification 138 is user configurable. In some implementations, an operating system is configured to automatically generate the user notification based on certain operations being performed at the application processor(s) 120. For example, the operating system may automatically generate the user notification 138 when a process or application is moved to the foreground, when a process or application runs on a reserved processor core 124, when a process or application accesses the context data 134, or under other conditions. In a particular aspect, user notifications 138 associated with the voice service process(es) 130 are suppressed, inhibited, or delayed until keyword detection is confirmed.

During operation, a voice service may be in a low-power state until the first stage keyword detector 108 indicates the keyword detection 110. The voice service being in a low-power state conserves power associated with execution of the voice service application. In some implementations, when the voice service is in the low-power state, one or more of the application processor(s) 120 may also be in a low-power state. In this context, an application or service is in a low-power state when the application or service is not being executed, when only background or monitoring processes of the application or service are being executed (e.g., when a listener process of the voice service is listening for the keyword detection 110, but other processes of the voice service are not being executed), or when one or more processes of the voice service are associated with scheduling privileges that do not allow execution of the process(es) on the reserved processor core(s) 124. In this context, a processor or core is in a low-power state when the processor or core is not being used to execute instructions. In some instances, a processor or core in a low-power state may be unpowered (e.g., off); may be powered but not provided a clock signal, may be powered but disconnected from operational memory, or may be powered at a lower power level than the processor or core uses when executing instructions.

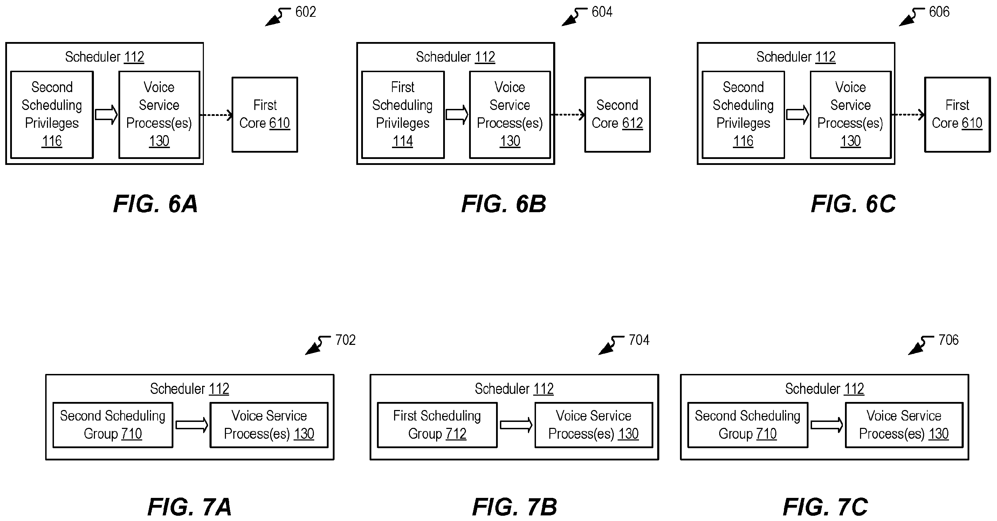

Based on a signal indicating the keyword detection 110 by the first stage keyword detector 108 and prior to confirmation of the keyword detection (e.g., keyword confirmation 128 of FIG. 1), the system 100 may initiate a change of state to enable the voice service or processes thereof (e.g., the voice service process(es) 130A) to be scheduled for execution on one or more of the reserved processor core(s) 124. Initiating the change of state to enable the voice service or processes thereof to execute on the reserved processor core(s) 124 before keyword confirmation 128 decreases latency associated with execution of the voice service. For example, since the reserved processor core(s) 124 are generally the highest performance cores of the application processor(s) 120, processes that execute at the reserved processor cores 124 can be executed more quickly than processes that execute at the additional processor cores 126. FIGS. 6A-10C illustrate various examples of state changes that can be initiate based on the keyword detection 110 to enable the voice service or processes thereof (e.g., the voice service process(es) 130) to be scheduled for execution on one or more of the reserved processor core(s) 124.

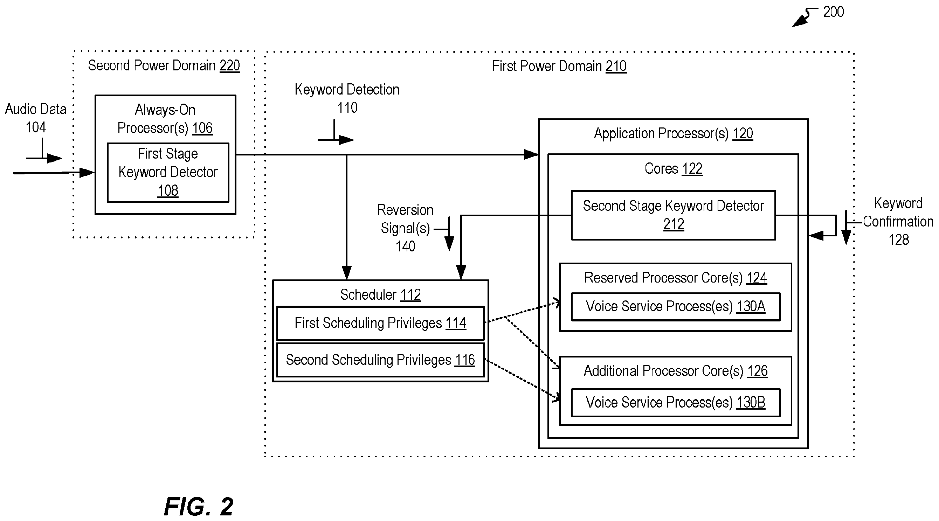

To limit power consumption associated with the always-on processor 106, the first stage keyword detector 108 uses a relatively small model to detect keywords. Accordingly, the first stage keyword detector 108 may occasionally generate a false keyword detection. To limit excess power consumption due to using the reserved processor core(s) 124 to execute voice service process(es) 130, a second stage keyword detector can be used to confirm or disconfirm the keyword detection 110. In the implementation illustrated in FIG. 1, the voice service performs operations of the second stage keyword detector. In other implementations, such as described with reference to FIGS. 2-5, the second stage keyword detector is distinct from the voice service and distinct from the first stage keyword detector 108. Using the reserved processor core(s) 124 increases power demand of the system 100. In a particular aspect, if the keyword detection 110 is not confirmed (or is disconfirmed), a reversion signal 140 may be generated to revert the system 100 to the state it was in prior to the signal indicating the keyword detection 110. The reversion signal 140 may be generated by the second stage keyword detector or by the voice service process(es) 130. Accordingly, the system 100 is able to significantly reduce latency associated with a voice service without significantly increasing power demand.

FIG. 2 is a block diagram of an example of a device 200 that is configured to reduce latency following an indication of keyword detection. In FIG. 2, the device 200 includes various components of the system 100 of FIG. 1, each of which operates as described with reference to FIG.1 unless otherwise indicated below. In the example illustrated in FIG. 2, the device 200 includes a first power domain 210 and a second power domain 220. In this example, the first power domain 210 is a higher power domain than the second power domain 220 is a lower power domain. For example, the second power domain 220 is configured to power low-power, always-on components, such as the always-on processor 106, and the first power domain 210 is configured to power higher power components, such as the application processor(s) 120, the scheduler 112, etc.

In the example illustrated in FIG. 2, the device 200 also includes a second stage keyword detector 212 that runs on one or more of the processor cores 122 of the application processor(s) 120. The second stage keyword detector 212 is configured to confirm or disconfirm the keyword detection 110. For example, after the first stage keyword detector 108 indicates, via the keyword detection 110, that a keyword has been detected in the audio data 104, the audio data 104 is provided to the second stage keyword detector 212 for keyword confirmation 128.

In the implementation illustrated in FIG. 2, the second stage keyword detector 212 is associated with the first power domain 210. Accordingly, the second stage keyword detector 212 may be in a low-power state when the first stage keyword detector 108 generates the keyword detection 110, in which case the second stage keyword detector 212 may be awakened or powered on based on (e.g., in response to) the first stage keyword detector 108 generating the keyword detection 110. Additionally, as described above, a change of state of the device 200 may be initiated based on (e.g., in response to) the first stage keyword detector 108 generating the keyword detection 110. For example, scheduling privileges associated with the voice service may be set, updated, or changed so that processes of the voice service are able to execute on the reserved processor core(s) 124. In a particular implementation, the change of state includes binding the voice service and a second stage keyword detector 212 such that scheduling privileges of the voice service are based on scheduling privileges of the second stage keyword detector 212. In such implementations, scheduling privileges of the second stage keyword detector 212 may be elevated to elevate the scheduling privileges of the voice service. For example, after the voice service and the second stage keyword detector 212 are bound, the scheduler 112 may change a designation of the second stage keyword detector 212 from a background application to a foreground application. In this example, if the second stage keyword detector 212 confirms the keyword detection, the voice service process(es) 130 are initiated as foreground services and are thus able to execute on the reserved processor core(s) 124. In some implementations, a user notification is automatically generated when an application is designated a foreground application. In such implementations, the application processor(s) 120 may be configured to execute instructions to delay or inhibit generation of a user notification associated with changing the designation of the second stage keyword detector 212 from the background application to the foreground application so that the user is not notified at least until the keyword confirmation 128 is complete.

In another example, after the voice service and the second stage keyword detector 212 are bound, the scheduler 112 may elevate the scheduling privileges of the second stage keyword detector 212 or change a scheduling priority of the second stage keyword detector 212 to enable the second stage keyword detector 212 to execute on the reserved processor core(s) 124. In this example, if the second stage keyword detector 212 confirms the keyword detection 110, the voice service process(es) 130 are able to execute on the reserved processor core(s) 124 when initiated.

In some implementations, the voice service is not bound to the second stage keyword detector 212, or the scheduling privileges of the voice service are changed irrespective of the scheduling privileges of the second stage keyword detector 212. For example, a change of state to modify (e.g., elevate) the scheduling privileges of the voice service can be initiated directly based on the keyword detection independent of binding the voice service and the second stage keyword detector 212. To illustrate, upon keyword detection 110 by the first stage keyword detector 108, the scheduler 112 may change a designation of the voice service from a background application to a foreground application. As another illustrative example, upon keyword detection 110 by the first stage keyword detector 108, the scheduler 112 may change a scheduling priority value (e.g., to a higher scheduling priority value) or other scheduling privileges of the voice service to enable the voice service process(es) to be scheduled for execution on the reserved processor core(s) 124.

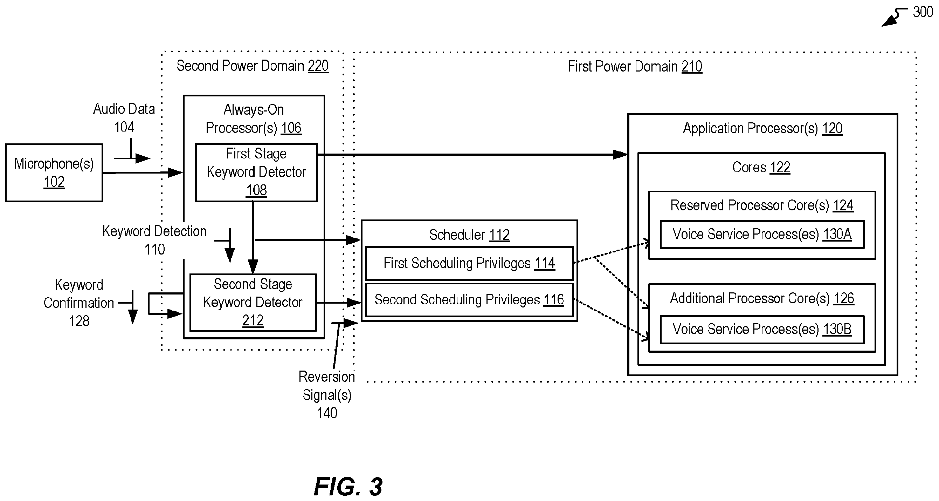

FIG. 3 is a block diagram of another example of a device 300 that is configured to reduce latency following an indication of keyword detection. In FIG. 3, the device 300 includes various components of the device 200 of FIG. 2, each of which operates as described with reference to FIG. 2 unless otherwise indicated below.

In the example illustrated in FIG. 3, the scheduler 112 and the application processor(s) 120 run in the first power domain 210; however, the second stage keyword detector 212 runs in the second power domain 220. For example, the scheduler 112 may run on one or more processor cores 122 of the application processor(s) 120. In a particular implementation of the example of FIG. 3, the second stage keyword detector runs as on the always-on processor(s) 106. As a result, the second stage keyword detector 212 has lower power demands than the second stage keyword detector 212 in the example of FIG. 2.

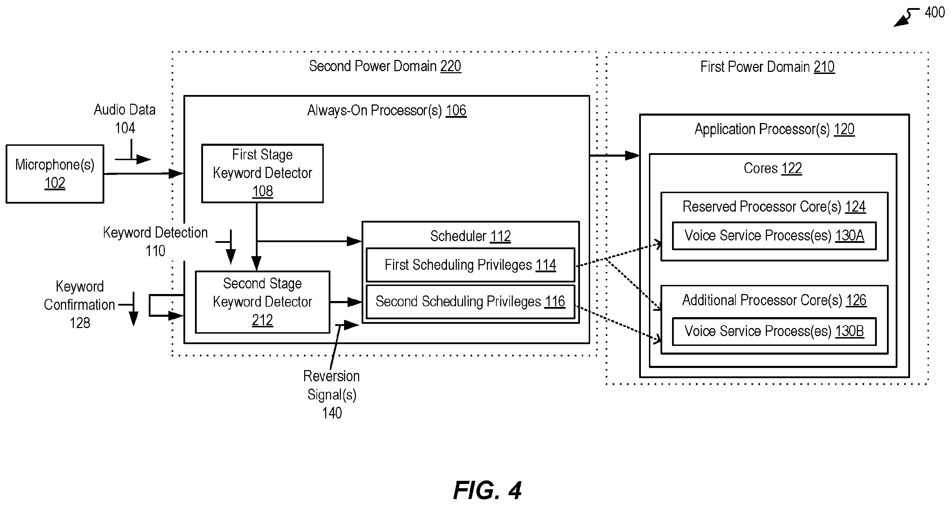

FIG. 4 is a block diagram of another example of a device 400 that is configured to reduce latency following an indication of keyword detection. In FIG. 4, the device 400 includes various components of the device 200 of FIG. 2, each of which operates as described with reference to FIG. 2 unless otherwise indicated below.

In the example illustrated in FIG. 4, the scheduler 112 and the second stage keyword detector 212 run in the second power domain 220, and the application processor(s) 120 run in the first power domain 210. For example, the scheduler 112 and the second stage keyword detector 212 may run on the always-on processor(s) 106. As a result, the second stage keyword detector 212 and the scheduler 112 have lower power demands than the second stage keyword detector 212 and the scheduler 112 in the examples of FIGS. 2 and 3.

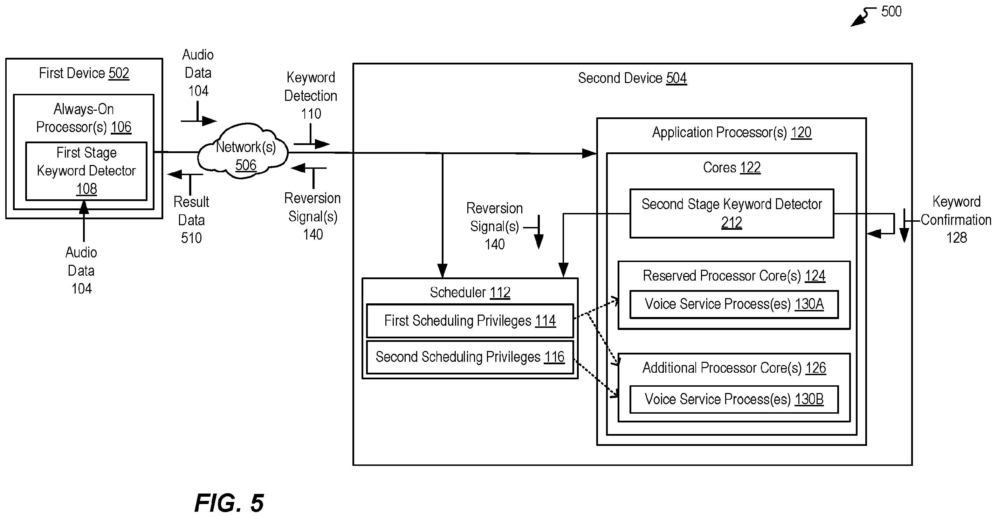

FIG. 5 is a block diagram of an example of a system 500 that is configured to reduce latency following an indication of keyword detection. In FIG. 5, the system 500 includes two or more devices, such as a first device 502 and a second device 504. In the example illustrated in FIG. 5, the first device 502 includes the always-on processor(s) 106 and the first stage keyword detector 108, and the second device 504 includes the scheduler 112, the application processor(s) 120, and the second stage keyword detector 212. In other implementations of the system 500, the scheduler 112, the second stage keyword detector 212, or both, are included in the first device 502. For example, the first device 502 may include or correspond to a user device, and the second device 504 may include or correspond to server or smart hub device.

In a particular aspect, the first device 502 and the second device 504 communicate via one or more networks 506 that each include communication links. In some implementations, one or more of the communication links is a wireless link that conforms to a proprietary standard or a published standard. Examples of wireless links include personal area network links, such as a link conforming to a BLUETOOTH^{®} protocol specification; wireless local area network links, such as a link conforming to an IEEE 802.11 protocol specification; and/or wireless wide area network links, such as a Long Term Evolution protocol specification (BLUETOOTH is a registered trademark of BLUETOOTH SIG, INC. of Kirkland, Washington, USA; IEEE is a registered trademark of The Institute of Electrical and Electronics Engineers, Inc. Piscataway New Jersey, USA). Examples of wired links include short range links, such as a universal serial bus link; and/or long range links, such as an ethernet link, a digital subscriber line link, a fiber optic link, etc.

In the example illustrated in FIG. 5, the first device 502 is configured to perform first stage keyword detection by monitoring the audio data 104. When the first stage keyword detector 108 generates an indication of keyword detection 110, the first device 502 sends the indication of keyword detection 110, via the network(s) 506, to the second device 504. The first device 502 also sends at least a portion of the audio data 104 to the second device 504 based on detecting the keyword.

Upon receipt of the indication of keyword detection 110 from the first device 502 and prior to confirmation of the keyword detection, the second device 504 initiates a change of state to enable a voice service that is in a low-power mode to be scheduled for execution on one or more reserved processor cores, as described with reference to FIG.1. If the second stage keyword detector 212 confirms the keyword detection 110, the voice service process(es) 130 analyze the audio data 104 and send result data 510 to the first device 502 via the network(s) 506. In some implementations, the result data 510 include data indicating words detected in speech represented by the audio data 104 (e.g., a voice command or voice inquiry that follows the keyword). In some implementations, the result data 510 include data responding to words detected in speech represented by the audio data 104 (e.g., a voice command or voice inquiry that follows the keyword). To illustrate, if the voice inquiry requested weather data, the result data 510 may include the requested weather data. In some implementations, the result data 510 include data indicating words detected in speech represented by the audio data 104 and data responding to words detected in speech represented by the audio data 104 (e.g., a voice command or voice inquiry that follows the keyword). For example, if the audio data includes a voice inquiry to search for particular information, the result data 510 may include a list of search results and text identifying the search used to generate the search results (e.g., text of the voice inquiry).

If the second stage keyword detector 212 disconfirms the keyword detection 110 or if more than a threshold amount of time passes after the keyword detection 110 is received without receipt of the audio data 104, the second stage keyword detector 212 (or another process of the application processor(s) 120), may generate the reversion signal(s) 140. In the example illustrated in FIG. 5, the reversion signal(s) 140 reset the second device 504 to a state of the second device 504 before the indication of keyword detection 110 was received. The reversion signal(s) 140 may also be transmitted, via the network(s) 506, to the first device 502 to cause the first device 502 to return to a state of the first device 502 before the first stage keyword detector 108 generated the indication of keyword detection 110.

FIGS. 6A, 6B, and 6C are diagrams that illustrate an example of operations performed by the scheduler 112 to reduce latency following an indication of keyword detection. In the example illustrated in FIGS. 6A, 6B, and 6C, the scheduler 112 assigns processes to particular processor cores (e.g., a first core 610 or a second core 612 in FIGS. 6A-C) based on scheduling privileges assigned to the processes. FIG. 6A illustrates a state 602 of the scheduler 112 before detection of a keyword by the first stage keyword detector 108 of FIGS. 1-5. In FIG. 6A, the second scheduling privileges 116 are assigned to the voice service process(es) 130, and as a result, the voice service process(es) 130 are assigned to the first core 610. In this example, processes associated with the second scheduling privileges 116 are allowed to execute on the additional process core(s) 126 of FIGS. 1-5 but are not allowed to execute on the reserved processor core(s) 124; thus, the first core 610 is one of the additional processor core(s) 126.

FIG. 6B illustrates a state 604 of the scheduler 112 after detection of the keyword by the first stage keyword detector of FIGS. 1-5. In FIG. 6B, the first scheduling privileges 114 are assigned to the voice service process(es) 130, and as a result, the voice service process(es) 130 are assigned to the second core 612. In this example, processes associated with the first scheduling privileges 114 are allowed to execute on the reserved processor core(s) 124 and the additional process core(s) 126 of FIGS. 1-5; thus, the second core 612 is one of the reserved processor core(s) 124 or one of the additional process core(s) 126. A change of state of the scheduler 112 from the state 602 to the state 604 is initiated upon the keyword detection 110 from the first stage keyword detector 108.

FIG. 6C illustrates a state 606 of the scheduler 112 after the keyword detection is disconfirmed (e.g., by the second stage keyword detector 212 of FIGS. 2-5 or by the voice service process(es) 130). The scheduler 112 may also, or alternatively, have the state 606 after speech recognition operations of the voice service have been completed (e.g., when an end of a voice interaction is reached). In FIG. 6C, the change of state from the state 602 to the state 604 has been reversed. Thus, in the state 606, the second scheduling privileges 116 are assigned to the voice service process(es) 130, and the voice service process(es) 130 are assigned to the first core 610.

FIGS. 7A, 7B, and 7C are diagrams that illustrate an example of operations performed by the scheduler 112 to reduce latency following an indication of keyword detection. In the example illustrated in FIGS. 7A, 7B, and 7C, the scheduler 112 assigns tasks, processes, or applications to scheduling groups, and the scheduling group to which a task, process, or application is assigned indicates at which processor core(s) the task, process, or application is allowed to execute. FIG. 7A illustrates a state 702 of the scheduler 112 before detection of a keyword by the first stage keyword detector 108 of FIGS. 1-5. In FIG. 7A, the voice service process(es) 130 are assigned to a second scheduling group 710. In this example, a process associated with the second scheduling group 710 is allowed to execute on the additional process core(s) 126 of FIGS. 1-5 but is not allowed to execute on the reserved processor core(s) 124.

FIG. 7B illustrates a state 704 of the scheduler 112 after detection of the keyword by the first stage keyword detector of FIGS. 1-5. In FIG. 7B, the voice service process(es) 130 are assigned to the first scheduling group 712. In this example, the first scheduling group 712 is a higher processing group than the second scheduling group 710, A process associated with the first scheduling group 712 is allowed to execute on the reserved processor core(s) 124 and the additional process core(s) 126 of FIGS. 1-5. A change of state of the scheduler 112 from the state 702 to the state 704 is initiated upon the keyword detection 110 from the first stage keyword detector 108.

FIG. 7C illustrates a state 706 of the scheduler 112 after the keyword detection is disconfirmed (e.g., by the second stage keyword detector 212 of FIGS. 2-5 or by the voice service process(es) 130). The scheduler 112 may also, or alternatively, have the state 706 after speech recognition operations of the voice service have been completed (e.g., when an end of a voice interaction is reached). In FIG. 7C, the change of state from the state 702 to the state 704 has been reversed. Thus, in the state 706, the voice service process(es) 130 is assigned to the second scheduling group 710 again.

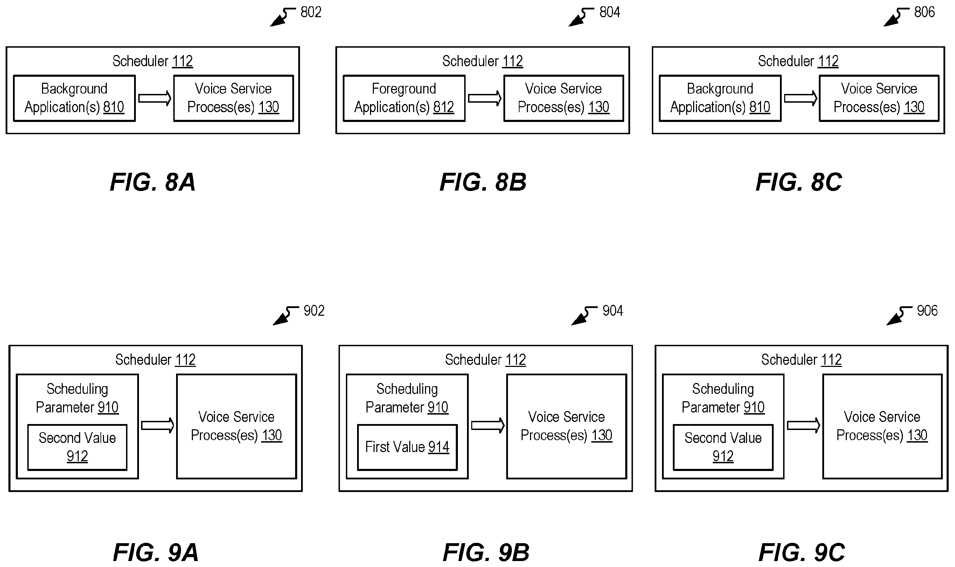

FIGS. 8A, 8B, and 8C are diagrams that illustrate an example of operations performed by the scheduler 112 to reduce latency following an indication of keyword detection. In the example illustrated in FIGS. 8A, 8B, and 8C, the scheduler 112 designates each application or process as a background application 810 or a foreground application 812. FIG. 8A illustrates a state 802 of the scheduler 112 before detection of a keyword by the first stage keyword detector 108 of FIGS. 1-5. In FIG. 8A, the voice service process(es) 130 are designated background applications 810. In this example, background applications 810 are allowed to execute on the additional process core(s) 126 of FIGS. 1-5 but are not allowed to execute on the reserved processor core(s) 124.

FIG. 8B illustrates a state 804 of the scheduler 112 after detection of the keyword by the first stage keyword detector of FIGS. 1-5. In FIG. 8B, the voice service process(es) 130 are designated foreground applications 812. In this example, foreground applications 812 are allowed to execute on the reserved processor core(s) 124 and the additional process core(s) 126 of FIGS. 1-5. A change of state of the scheduler 112 from the state 802 to the state 804 is initiated upon the keyword detection 110 from the first stage keyword detector 108.

FIG. 8C illustrates a state 806 of the scheduler 112 after the keyword detection is disconfirmed (e.g., by the second stage keyword detector 212 of FIGS. 2-5 or by the voice service process(es) 130). The scheduler 112 may also, or alternatively, have the state 806 after speech recognition operations of the voice service have been completed (e.g., when an end of a voice interaction is reached). In FIG. 8C, the change of state from the state 802 to the state 804 has been reversed. Thus, in the state 806, the voice service process(es) 130 are designated background applications 810.

FIGS. 9A, 9B, and 9C are diagrams that illustrate an example of operations performed by the scheduler 112 to reduce latency following an indication of keyword detection. In the example illustrated in FIGS. 9A, 9B, and 9C, the scheduler 112 modifies scheduling parameters 910 to schedule processes, such as the voice service process(es) 130. In particular, the scheduler 112 changes one or more values of the scheduling parameters 910.

FIG. 9A illustrates a state 902 of the scheduler 112 before detection of a keyword by the first stage keyword detector 108 of FIGS. 1-5. In FIG. 9A, a second value 912 of the scheduling parameter 910 is assigned to the voice service process(es) 130. In this example, a process that is assigned the second value 912 of the scheduling parameter 910 is allowed to execute on the additional process core(s) 126 of FIGS. 1-5 but is not allowed to execute on the reserved processor core(s) 124.

FIG. 9B illustrates a state 904 of the scheduler 112 after detection of the keyword by the first stage keyword detector of FIGS. 1-5. In FIG. 9B, a first value 914 of the scheduling parameter 910 is assigned to the voice service process(es) 130. In this example, a process that is assigned the first value 914 of the scheduling parameter 910 is allowed to execute on the reserved processor core(s) 124 and the additional process core(s) 126 of FIGS. 1-5. A change of state of the scheduler 112 from the state 902 to the state 904 is initiated upon the keyword detection 110 from the first stage keyword detector 108.

FIG. 9C illustrates a state 906 of the scheduler 112 after the keyword detection is disconfirmed (e.g., by the second stage keyword detector 212 of FIGS. 2-5 or by the voice service process(es) 130). The scheduler 112 may also, or alternatively, have the state 906 after speech recognition operations of the voice service have been completed (e.g., when an end of a voice interaction is reached). In FIG. 9C, the change of state from the state 902 to the state 904 has been reversed. Thus, in the state 906, the second value 912 of the scheduling parameter 910 is again assigned to the voice service process(es) 130.

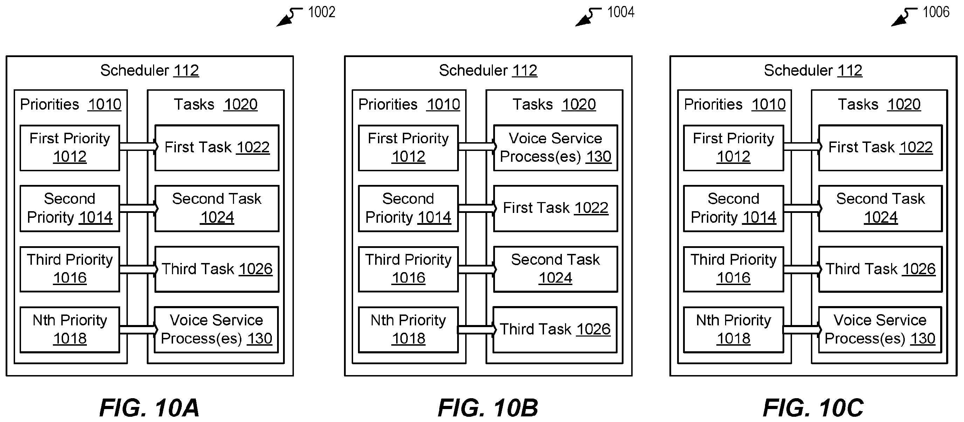

FIGS. 10A, 10B, and 10C are diagrams that illustrate an example of operations performed by the scheduler 112 to reduce latency following an indication of keyword detection. In the example illustrated in FIGS. 10A, 10B, and 10C, the scheduler 112 assigns a priority 1010 to each task 1020 that is to be executed, where a task 1020 includes an application, a process, or a portion of a process, and the tasks 1020 are scheduled for execution according to their assigned priority 1010. For example, in FIG. 10A, a first task 1022 is associated with a first priority 1012, which in this example is the highest priority; thus, the first task 1022 is scheduled for execution before others of the tasks 1020.

FIG. 10A illustrates a state 1002 of the scheduler 112 before detection of a keyword by the first stage keyword detector 108 of FIGS. 1-5. In FIG. 10A, the first priority 1012 is assigned to the first task 1022, a second priority 1014 is assigned to a second task 1024, a third priority 1016 is assigned to a third task 1026, and an Nth priority 1018 is assigned to the voice service process(es) 130 or a task of the voice service process(es) 130. In FIGS. 10A-C, N represents an integer greater than or equal to four. In this example, the task that is assigned the first priority 1012 (e.g., the first task 1022) is a highest priority task and is scheduled for execution ahead of the other tasks 1020. In some implementations, only tasks assigned at least a threshold priority level are allowed to execute on the reserved processor core(s) 124.

FIG. 10B illustrates a state 1004 of the scheduler 112 after detection of the keyword by the first stage keyword detector of FIGS. 1-5. In FIG. 10B, the voice service process(es) 130 or one or more tasks of the voice service process(es) 130 are assigned the first priority 1012 and the other tasks 1020 are shifted down in priority. A change of state of the scheduler 112 from the state 1002 to the state 1004 is initiated upon the keyword detection 110 from the first stage keyword detector 108.

FIG. 10C illustrates a state 1006 of the scheduler 112 after the keyword detection is disconfirmed (e.g., by the second stage keyword detector 212 of FIGS. 2-5 or by the voice service process(es) 130). The scheduler 112 may also, or alternatively, have the state 1006 after speech recognition operations of the voice service have been completed (e.g., when an end of a voice interaction is reached). In FIG. 10C, the change of state from the state 1002 to the state 1004 has been reversed. Thus, in the state 1006, the voice service process(es) 130 or a task of the voice service process(es) 130 are again assigned to the Nth priority 1018.

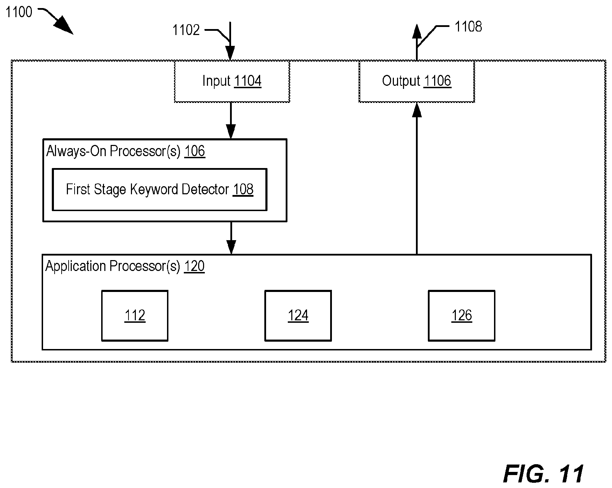

FIG. 11 depicts an implementation of the system 100 as an integrated circuit 1100 that includes the always-on processor(s) 106 and the application processor(s) 120. The integrated circuit 1100 includes an input 1104, such as one or more bus interfaces, to enable the input data 1102 to be received. The input data 1102 may include or correspond to the audio data 104, the context data 134, or other data. The integrated circuit 1100 also includes an output 1106, such as a bus interface, to enable sending of an output signal 1108, such as the user notification 138.

In FIG. 11, the always-on processor(s) 106 include the first stage keyword detector 108. Additionally, the always-on processor(s) 106 are coupled to the application processor(s) 120. In the particular implementation illustrated in FIG. 11, the application processor(s) 120 include the scheduler 112, the reserved processor core(s) 124, and the additional processor core(s) 126. In other implementations, the always-on processor(s) 106 include the scheduler 112. The integrated circuit 1100 enables implementation of speech recognition with low latency while conserving power. In some implementations, the integrated circuit 1100 can be incorporated into another device to enable the other device to provide speech recognition with low latency while conserving power.

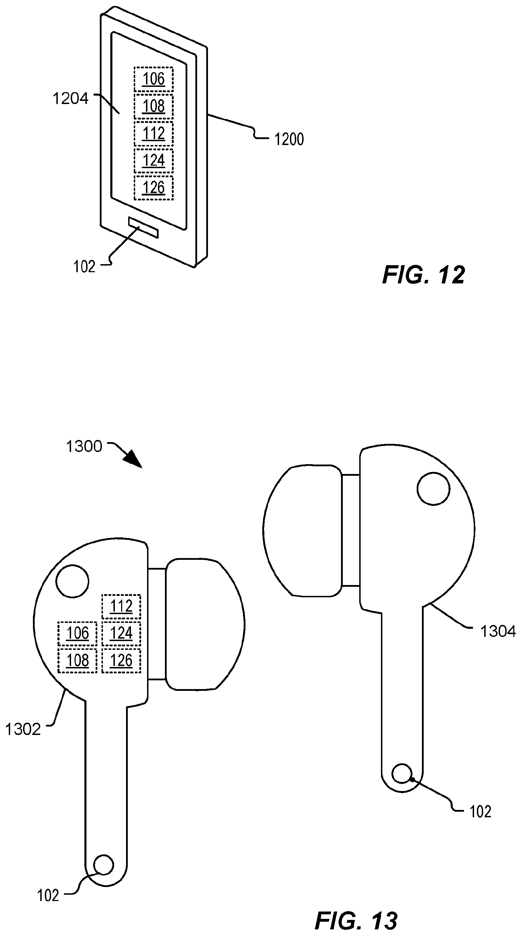

FIG. 12 illustrates a mobile device 1200 that incorporates aspects of the system 100 of FIG. 1. For example, in FIG. 12, the mobile device 1200 includes the system 100 of FIG. 1, the device 200 of FIG. 2, the device 300 of FIG. 3, the device 400 of FIG. 4, the integrated circuit 1100 of FIG. 11, or a combination thereof. In FIG. 12, the mobile device 1200 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The mobile device 1200 includes a phone or tablet, as illustrative, non-limiting examples. The mobile device 1200 includes a display screen 1204 and one or more sensors, such as the microphone(s) 102 of FIG. 1.

During operation, the mobile device 1200 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

FIG. 13 illustrates earbuds 1300 that incorporate aspects of the system 100 of FIG. 1. For example, in FIG. 13, the earbuds 1300 include the system 100 of FIG. 1, the device 200 of FIG. 2, the device 300 of FIG. 3, the device 400 of FIG. 4, the integrated circuit 1100 of FIG. 11, or a combination thereof. For example, in FIG. 13, a first earbud 1302 of the earbuds 1300 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. In some implementations, a second earbud 1304 includes another instance of each of the always-on processor(s) 106, the first stage keyword detector 108, the scheduler 112, the reserved processor core(s) 124, and the additional processor core(s) 126. In still other implementations, the always-on processor(s) 106, the first stage keyword detector 108, the scheduler 112, the reserved processor core(s) 124, and the additional processor core(s) 126 are divided among the first earbud 1302 and the second earbud 1304.

The earbuds 1300 include the microphone(s) 102, at least one of which is positioned to primarily capture speech of a user. The earbuds 1300 may also include one or more additional microphones positioned to primarily capture environmental sounds (e.g., for noise canceling operations).

In a particular aspect, during operation, the earbuds 1300 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

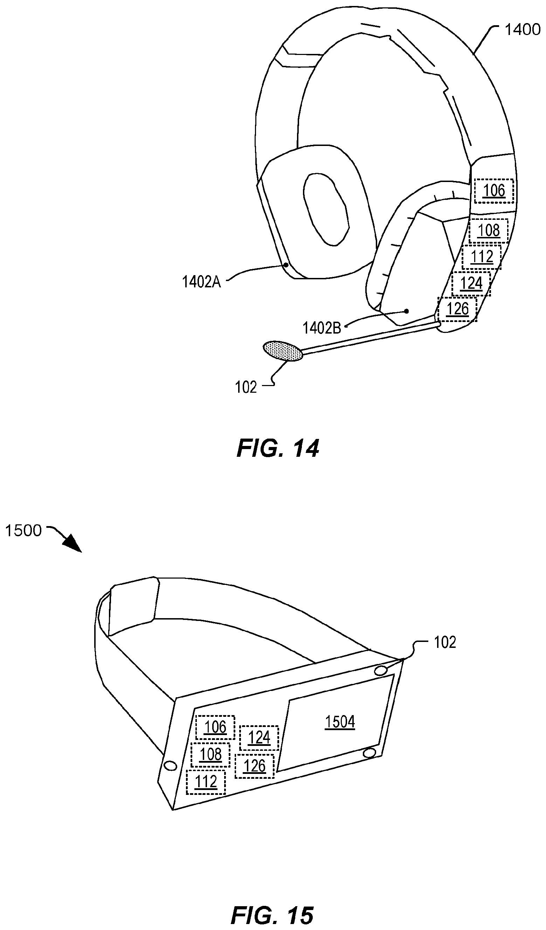

FIG. 14 illustrates a headset 1400 that incorporates aspects of the system 100 of FIG. 1. For example, in FIG. 14, the headset 1400 includes the system 100 of FIG. 1, the device 200 of FIG. 2, the device 300 of FIG. 3, the device 400 of FIG. 4, the integrated circuit 1100 of FIG. 11, or a combination thereof. In FIG. 14, the headset 1400 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The headset 1400 includes the microphone(s) 102 positioned to primarily capture speech of a user, and one or more additional microphones (e.g., microphones 1402A and 1402B) positioned to primarily capture environmental sounds (e.g., for noise canceling operations).

In a particular aspect, during operation, the headset 1400 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

FIG. 15 depicts an example of the system 100 integrated into a wearable electronic device 1500, illustrated as a "smart watch," that includes a display 1504 and sensor(s), such as the microphone(s) 102. For example, in FIG. 15, the wearable electronic device 1500 includes the system 100 of FIG. 1, the device 200 of FIG. 2, the device 300 of FIG. 3, the device 400 of FIG. 4, the integrated circuit 1100 of FIG. 11, or a combination thereof. In FIG. 15, the wearable electronic device 1500 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user.

In a particular aspect, during operation, the wearable electronic device 1500 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

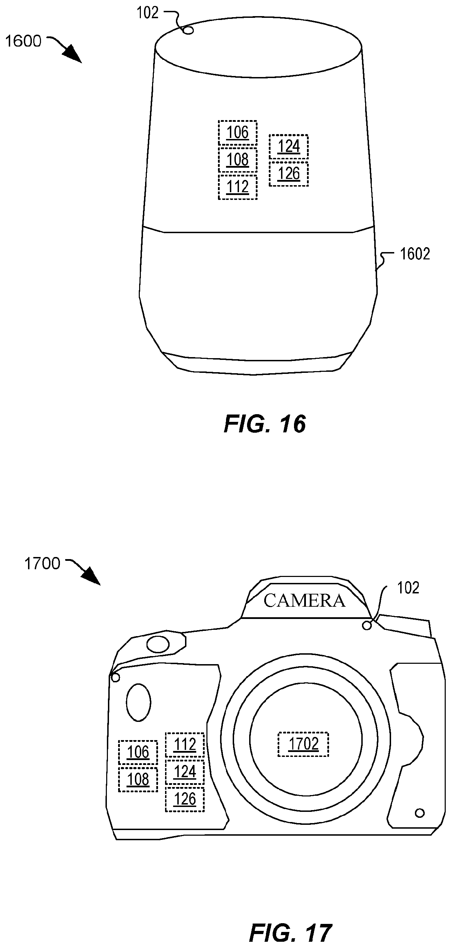

FIG. 16 is an illustrative example of a voice-controlled speaker system 1600 that includes aspects of the system 100 of FIG. 1. The voice-controlled speaker system 1600 can have wireless network connectivity and is configured to execute voice assistant operations. In FIG. 16, the voice-controlled speaker system 1600 includes the system 100 of FIG. 1, the device 200 of FIG. 2, the device 300 of FIG. 3, the device 400 of FIG. 4, the integrated circuit 1100 of FIG. 11, or a combination thereof. In FIG. 16, the voice-controlled speaker system 1600 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The voice-controlled speaker system 1600 also includes one or more speakers 1602 and the microphone(s) 102 of FIG. 1 to receive voice input or other audio input.

In a particular aspect, during operation, the voice-controlled speaker system 1600 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

FIG. 17 illustrates a camera 1700 that incorporates aspects of the system 100 of FIG. 1. For example, in FIG. 17, the camera 1700 includes the system 100 of FIG. 1, the device 200 of FIG. 2, the device 300 of FIG. 3, the device 400 of FIG. 4, the integrated circuit 1100 of FIG. 11, or a combination thereof. In FIG. 17, the camera 1700 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The camera 1700 also includes an image sensor 1702.

In a particular aspect, during operation, the camera 1700 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

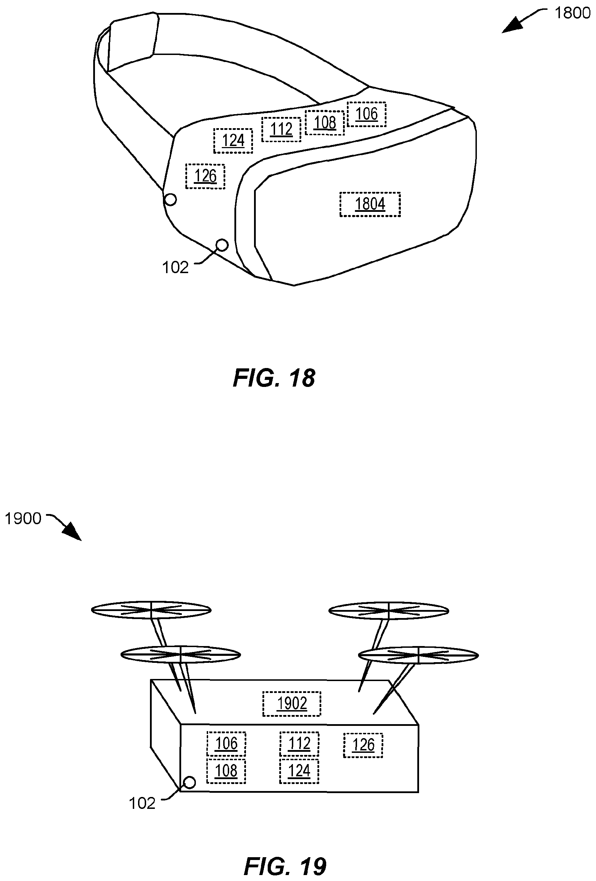

FIG. 18 depicts an example of the system 100 coupled to or integrated within a headset 1800, such as a virtual reality headset, an augmented reality headset, a mixed reality headset, an extended reality headset, a head-mounted display, or a combination thereof. A visual interface device, such as a display 1804, is positioned in front of the user's eyes to enable display of augmented reality or virtual reality images or scenes to the user while the headset 1800 is worn. For example, in FIG. 18, the headset 1800 includes the system 100 of FIG. 1, the device 200 of FIG. 2, the device 300 of FIG. 3, the device 400 of FIG. 4, the integrated circuit 1100 of FIG. 11, or a combination thereof. In FIG. 18, the headset 1800 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The headset 1800 also includes one or more sensor(s), such as the microphone(s) 102 of FIG. 1, cameras, other sensors, or a combination thereof.

In a particular aspect, during operation, the headset 1800 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

FIG. 19 illustrates a vehicle (e.g., an aerial device 1900) that incorporates aspects of the system 100 of FIG. 1. For example, in FIG. 19, the aerial device 1900 includes the system 100 of FIG. 1, the device 200 of FIG. 2, the device 300 of FIG. 3, the device 400 of FIG. 4, the integrated circuit 1100 of FIG. 11, or a combination thereof. In FIG. 19, the aerial device 1900 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user.

The aerial device 1900 is a manned, unmanned, or remotely piloted aerial device (e.g., a package delivery drone). The aerial device 1900 includes a control system 1902 and one or more sensors, such as the microphone(s) 102 of FIG. 1. The control system 1902 controls various operations of the aerial device 1900, such as cargo release, sensor activation, take-off, navigation, landing, or combinations thereof. For example, the control system 1902 may control flight of the aerial device 1900 between specified points and deployment of cargo at a particular location.

During operation, the aerial device 1900 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

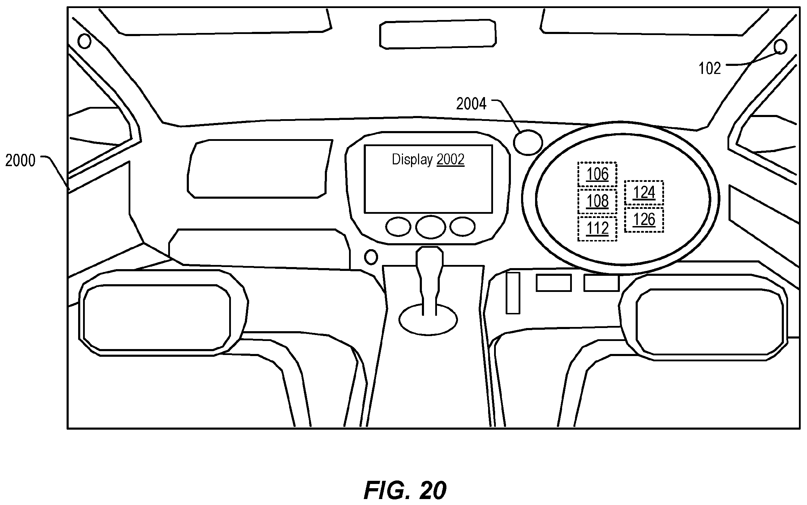

FIG. 20 is an illustrative example of a vehicle 2000 that incorporates aspects of the system 100 of FIG. 1. According to one implementation, the vehicle 2000 is a self-driving car. According to other implementations, the vehicle 2000 is a car, a truck, a motorcycle, an aircraft, a water vehicle, etc. In FIG. 20, the vehicle 2000 includes a screen 2002, one or more sensor 2004, and the microphone(s) 102 of FIG. 1. For example, in FIG. 20, the vehicle 2000 includes the system 100 of FIG. 1, the device 200 of FIG. 2, the device 300 of FIG. 3, the device 400 of FIG. 4, the integrated circuit 1100 of FIG. 11, or a combination thereof. In FIG. 20, the vehicle 2000 includes the always-on processor(s) 106, the first stage keyword detector 108, the scheduler 112, the reserved processor core(s) 124, and the additional processor core(s) 126, each of which is illustrated in dotted lines to indicate that they are not generally visible to a user. The system 100 can be integrated into the vehicle 2000 or coupled to the vehicle 2000.

In a particular implementation, the sensor(s) 2004 include vehicle occupancy sensors, eye tracking sensor, or external environment sensors (e.g., lidar sensors or cameras). In a particular aspect, sensor data from the sensor(s) 2004 indicates a location of the user. For example, the sensor(s) 2004 are associated with various locations within the vehicle 2000.

In a particular aspect, during operation, the vehicle 2000 may perform particular actions in response to speech input from a user. For example, a user can speak a keyword to wake up or initiate a voice assistant application that uses or includes the voice service process(es) 130 of FIG. 1-5. In this example, the first stage keyword detector 108 detects the keyword and generates an indication of keyword detection. In response to the indication of keyword detection and before the keyword detection is confirmed, a change of state is initiated at the scheduler 112 to enable the voice service process(es) 130 to execute at the reserved processor core(s) 124.

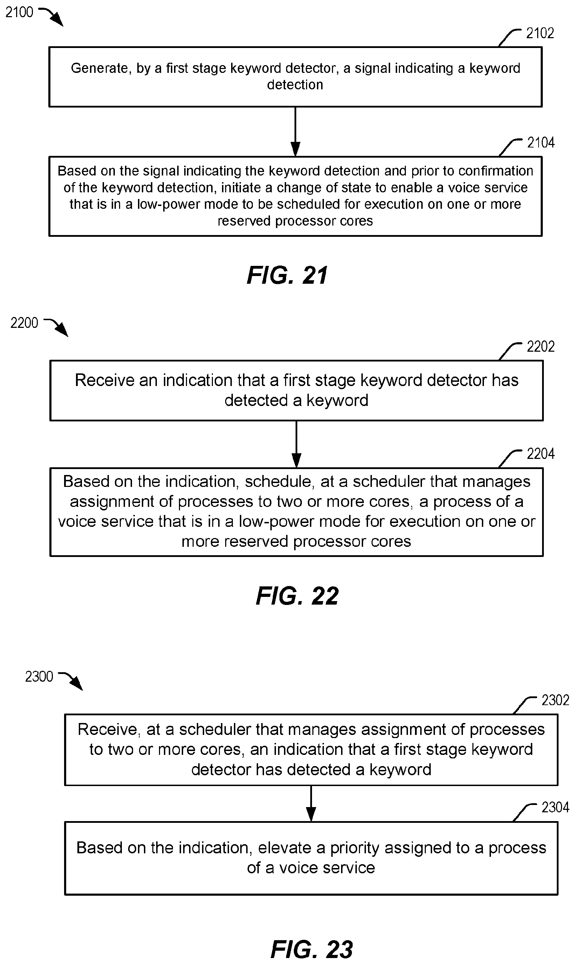

FIG. 21 is a flow chart illustrating aspects of an example of a method 2100 of reducing latency following an indication of keyword detection. The method 2100 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2100.

The method 2100 includes, at block 2102, generating, by a first stage keyword detector, a signal indicating a keyword detection. For example, the first stage keyword detector 108 may monitor the audio data 104 from the microphone(s) 102 and generate an indication of keyword detection 110 when the first stage keyword detector 108 detects a keyword.

The method 2100 includes, at block 2104, based on the signal indicating the keyword detection and prior to confirmation of the keyword detection, initiating a change of state to enable a voice service that is in a low-power mode to be scheduled for execution on one or more reserved processor cores. For example, the change of state may be initiated before the keyword confirmation 128 is completed. Particular non-limiting examples of the change of state are described with reference to FIGS. 6A-10C.

FIG. 22 is a flow chart illustrating aspects of an example of a method 2200 of reducing latency following an indication of keyword detection. The method 2200 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2200.

The method 2200 includes, at block 2202, receiving an indication that a first stage keyword detector has detected a keyword. For example, the first stage keyword detector 108 may monitor the audio data 104 from the microphone(s) 102 and generate the indication of keyword detection 110 when the first stage keyword detector 108 detects a keyword. In this example, the indication of keyword detection 110 may be received at the scheduler 112, at the application processor(s) 120, or both.

The method 2200 includes, at block 2204, based on the indication, scheduling, at a scheduler that manages assignment of processes to two or more cores, a process of a voice service that is in a low-power mode for execution on one or more reserved processor cores. For example, the scheduler 112 of any of FIGS. 1-10C may schedule the voice service process(es) 130 for execution at the reserved processor cores 124, as described above.

FIG. 23 is a flow chart illustrating aspects of an example of a method 2300 of reducing latency following an indication of keyword detection. The method 2300 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2300.

The method 2300 includes, at block 2302, receiving, at a scheduler that manages assignment of processes to two or more cores, an indication that a first stage keyword detector has detected a keyword. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is received at least at the scheduler 112.

The method 2300 includes, at block 2304, based on the indication, elevating a priority assigned to a process of a voice service. For example, the scheduler 112 of any of FIGS. 1-10C may elevate the priority assign to any of the voice service process(es) 130, as described with reference to FIGS. 10A-10C.

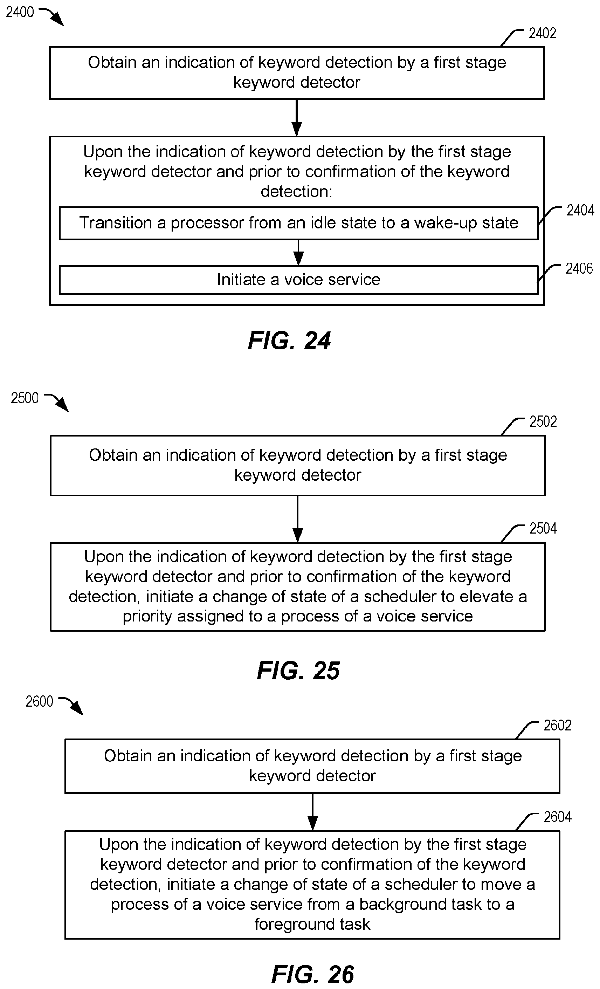

FIG. 24 is a flow chart illustrating aspects of an example of a method 2400 of reducing latency following an indication of keyword detection. The method 2400 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2400.

The method 2400 includes, at block 2402, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2400 includes, upon the indication of keyword detection by the first stage keyword detector and prior to confirmation of the keyword detection, at block 2404 transitioning a processor from an idle state to a wake-up state and, at block 2406, initiating a voice service. For example, prior to the keyword detection 110 of FIG. 1, the application processor(s) 120 may be in an idle state, a sleep state, a standby state, or another low-power state, and the application processor(s) 120 may be awaken (e.g., transitioned to a wake-up state) in response to the indication of keyword detection 110.

FIG. 25 is a flow chart illustrating aspects of an example of a method 2500 of reducing latency following an indication of keyword detection. The method 2500 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2500.

The method 2500 includes, at block 2502, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2500 includes, at block 2504, upon the indication of keyword detection by the first stage keyword detector and prior to confirmation of the keyword detection, initiating a change of state of a scheduler to elevate a priority assigned to a process of a voice service. For example, the scheduler 112 of any of FIGS. 1-10C may elevate the priority assign to any of the voice service process(es) 130, as described with reference to FIGS. 10A-10C. In other examples, the priority assigned to the voice service process(es) 130 may be elevated as a result of changing the voice service or the voice service process(es) 130 from background to foreground tasks or by changing a scheduling group associated with the voice service or the voice service process(es) 130. In some implementations, the change of state can be initiated by binding the voice service process(es) 130 to a second stage keyword detector and elevating a priority assigned to the second stage keyword detector.

FIG. 26 is a flow chart illustrating aspects of an example of a method 2600 of reducing latency following an indication of keyword detection. The method 2600 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2600.

The method 2600 includes, at block 2602, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2600 includes, at block 2604, upon the indication of keyword detection by the first stage keyword detector and prior to confirmation of the keyword detection, initiating a change of state of a scheduler to move a process of a voice service from a background task to a foreground task. For example, the scheduler 112 of any of FIGS. 1-10C may change from the voice service or the voice service process(es) 130 from a background application 810 to a foreground application 812, as described with reference to FIGS. 8A-8C.

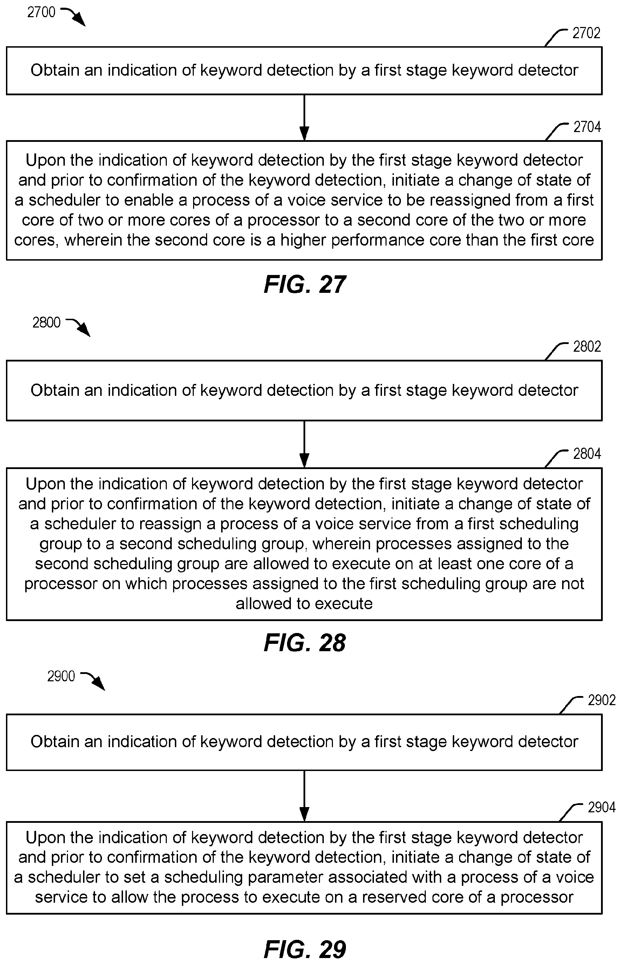

FIG. 27 is a flow chart illustrating aspects of an example of a method 2700 of reducing latency following an indication of keyword detection. The method 2700 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2700.

The method 2700 includes, at block 2702, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2700 includes, at block 2704, upon the indication of keyword detection by the first stage keyword detector and prior to confirmation of the keyword detection, initiating a change of state of a scheduler to enable a process of a voice service to be reassigned from a first core of two or more cores of a processor to a second core of the two or more cores, wherein the second core is a higher performance core than the first core. For example, the scheduler 112 of any of FIGS. 1-10C may reassign the voice service or the voice service process(es) 130 from the first core 610 to the second core 612, as described with reference to FIGS. 6A-6C.

FIG. 28 is a flow chart illustrating aspects of an example of a method 2800 of reducing latency following an indication of keyword detection. The method 2800 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2800.

The method 2800 includes, at block 2802, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2800 includes, at block 2804, upon the indication of keyword detection by the first stage keyword detector and prior to confirmation of the keyword detection, initiating a change of state of a scheduler to reassign a process of a voice service from a first scheduling group to a second scheduling group, wherein processes assigned to the second scheduling group are allowed to execute on at least one core of a processor on which processes assigned to the first scheduling group are not allowed to execute. For example, the scheduler 112 of any of FIGS. 1-10C may reassign the voice service or the voice service process(es) 130 from the second scheduling group 710 to the first scheduling group 712, as described with reference to FIGS. 7A-7C.

FIG. 29 is a flow chart illustrating aspects of an example of a method 2900 of reducing latency following an indication of keyword detection. The method 2900 can be initiated, controlled, or performed by the system 100 of FIG. 1, by the device 200 of FIG. 2, by the device 300 of FIG. 3, by the device 400 of FIG. 4, or a combination thereof. In a particular aspect, one or more processor(s), such as the always-on processor(s) 106, the application processor(s) 120, or both, can execute instructions from a memory to perform the method 2900.

The method 2900 includes, at block 2902, obtaining an indication of keyword detection by a first stage keyword detector. For example, the first stage keyword detector 108 may monitor the audio data 104 from the microphone(s) 102 and generate an indication of keyword detection 110 when the first stage keyword detector 108 detects a keyword. In this example, the indication of keyword detection 110 is obtained by the scheduler 112, by the application processor(s) 120, or both. In some implementations, the indication of keyword detection 110 is obtained by reading the indication of keyword detection 110 from a memory that is accessible to the always-on processor(s) 106, the scheduler 112, and the application processor(s) 120. In other implementations, the indication of keyword detection 110 is obtained by the scheduler 112, the application processor(s) 120, or both, via a signal that includes the indication of keyword detection 110 from the always-on processor(s) 106.

The method 2900 includes, at block 2904, upon the indication of keyword detection by the first stage keyword detector and prior to confirmation of the keyword detection, initiating a change of state of a scheduler to set a scheduling parameter associated with a process of a voice service to allow the process to execute on a reserved core of a processor. For example, the scheduler 112 of any of FIGS. 1-10C may change a value of a scheduling parameter 910 of the voice service or the voice service process(es) 130, such as from the second value 912 to the first value 914, as described with reference to FIGS. 9A-9C.

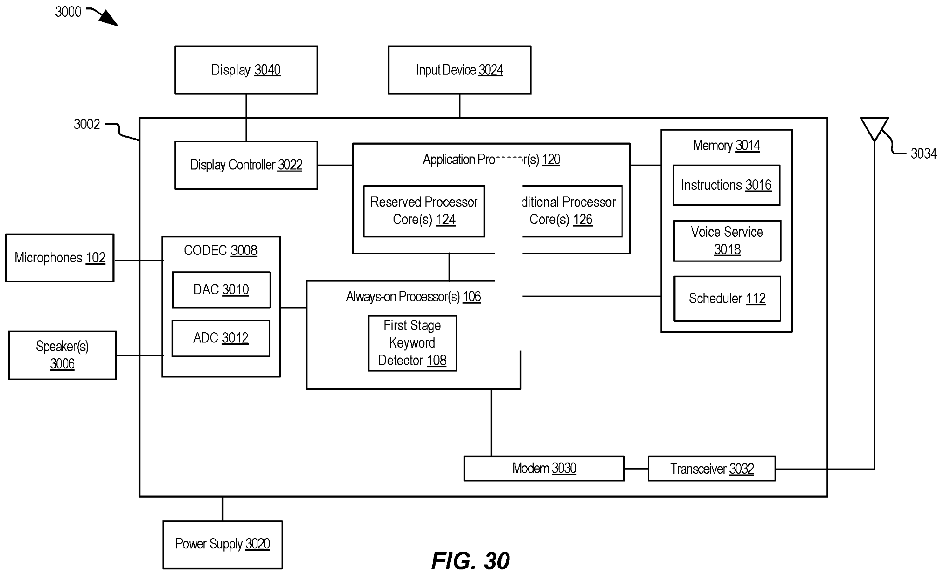

Referring to FIG. 30, a block diagram of a particular illustrative example of a device is depicted and generally designated 3000. In various aspects, the device 3000 may have fewer or more components than illustrated in FIG. 30. In an illustrative aspect, the device 3000 may correspond to or include the system 100 of FIG. 1, the device 200 of FIG. 2, the device 300 of FIG. 3, the device 400 of FIG. 4, or a combination thereof. In an illustrative aspect, the device 3000 may perform one or more operations described with reference to systems and methods of FIGS. 1-29.

In a particular aspect, the device 3000 includes the application processor(s) 120, which include the reserved processor core(s) 124 and the additional processor core(s) 126. The device 3000 also includes the always-on processor(s) 106, which are configured to run the first stage keyword detector 108. The always-on processor(s) 106, the application processor(s) 120, or both, may execute instructions 3016 from a memory 3014 to initiate, control or perform operations of the scheduler 112, a voice service 3018, or both. In some implementations, the memory 3014 is a shared memory that is accessible to the always-on processor(s) 106 and the application processor(s) 120. In such implementations, the keyword detection 110 of FIGS. 1-5 may be indicated by the always-on processor(s) 106 storing a value (e.g., setting a flag) in the memory 3014, in which case the application processor(s) 120 or another component (e.g., a particular always-on processor 106 that runs the scheduler 112) may periodically or occasionally check the value in the memory 3014 to determine whether a keyword has been detected.

In FIG. 30, the device 3000 also includes a modem 3030 coupled to a transceiver 3032 and an antenna 3034. The transceiver 3032 may include a receiver, a transmitter, or both. The always-on processor(s) 106, the application processor(s) 120, or a combination thereof, are coupled via the modem 3030 to the transceiver 3032.

The device 3000 may include a display 3040 coupled to a display controller 3022. The speaker(s) 3006 and the microphone(s) 102 may be coupled, via one or more interfaces, to a CODEC 3008. The CODEC 3008 may include a digital-to-analog converter (DAC) 3010 and an analog-to-digital converter (ADC) 3012. The display 3040, the speaker(s) 3006, or both, may correspond to the output device(s) 136 of FIG. 1.

The memory 3014 may store the instructions 3016, which are executable by the always-on processor(s) 106, the application processor(s) 120, or a combination thereof, to perform one or more operations described with reference to FIGS. 1-29. The memory 3014 may store data, one or more signals, one or more parameters, one or more thresholds, one or more indicators, or a combination thereof, described with reference to FIGS. 1-29.

One or more components of the device 3000 may be implemented via dedicated hardware (e.g., circuitry), by a processor (e.g., the always-on processor(s) 106 or the application processor(s) 120) executing the instructions 3016 to perform one or more tasks, or a combination thereof. As an example, the memory 3014 may include or correspond to a memory device (e.g., a computer-readable storage device), such as a random access memory (RAM), magnetoresistive random access memory (MRAM), spin-torque transfer MRAM (STT-MRAM), flash memory, read-only memory (ROM), programmable read-only memory (PROM), erasable programmable read-only memory (EPROM), electrically erasable programmable read-only memory (EEPROM), registers, hard disk, a removable disk, or a compact disc read-only memory (CD-ROM). The memory device may include (e.g., store) instructions (e.g., the instructions 3016) that, when executed by a computer (e.g., one or more processors, such the always-on processor(s) 106 and/or the application processor(s) 120), may cause the computer to perform one or more operations described with reference to FIGS. 1-29. As an example, the memory 3014 or one or more components of the always-on processor(s) 106 and/or the application processor(s) 120 may be a non-transitory computer-readable medium that includes instructions (e.g., the instructions 3016) that, when executed by a computer (e.g., one or more processors, such as the always-on processor(s) 106 and/or the application processor(s) 120), cause the computer to perform one or more operations described with reference to FIGS. 1-29.

In a particular aspect, the device 3000 may be included in a system-in-package or system-on-chip device 3002. In a particular aspect, the always-on processor(s) 106, the application processor(s) 120, the display controller 3022, the memory 3014, the CODEC 3008, the modem 3030, and the transceiver 3032 are included in the system-in-package or system-on-chip device 3002. In a particular aspect, an input device 3024, such as a touchscreen and/or keypad, and a power supply 3020 are coupled to the system-in-package or system-on-chip device 3002. Moreover, in a particular aspect, as illustrated in FIG. 30, the display 3040, the input device 3024, the speaker(s) 3006, the microphone(s) 102, the antenna 3034, and the power supply 3020 are external to the system-in-package or system-on-chip device 3002. However, each of the display 3040, the input device 3024, the speaker(s) 3006, the microphone(s) 102, the antenna 3034, and the power supply 3020 can be coupled to a component of the system-in-package or system-on-chip device 3002, such as an interface or a controller.

The device 3000 may include a wireless telephone, a mobile communication device, a mobile device, a mobile phone, a smart phone, a cellular phone, a virtual reality headset, an augmented reality headset, a mixed reality headset, a vehicle (e.g., a car), a laptop computer, a desktop computer, a computer, a tablet computer, a set top box, a personal digital assistant (PDA), a display device, a television, a gaming console, a music player, a radio, a video player, an entertainment unit, a communication device, a fixed location data unit, a personal media player, a digital video player, a digital video disc (DVD) player, a tuner, a camera, a navigation device, earbuds, an audio headset (e.g., headphones), or any combination thereof.

It should be noted that various functions performed by the one or more components of the systems described with reference to FIGS. 1-29 and the device 3000 are described as being performed by certain components or modules. This division of components and modules is for illustration only. In an alternate aspect, a function performed by a particular component or module may be divided amongst multiple components or modules. Moreover, in an alternate aspect, two or more components or modules described with reference to FIGS. 1-30 may be integrated into a single component or module. Each component or module described with reference to FIGS. 1-30 may be implemented using hardware (e.g., a field-programmable gate array (FPGA) device, an application-specific integrated circuit (ASIC), a DSP, a controller, etc.), software (e.g., instructions executable by a processor), or any combination thereof.

In some aspects, in conjunction with the described implementations, an apparatus includes means for generating a signal indicating a keyword detection. For example, the means for generating a signal indicating a keyword detection includes the always-on processor(s) 106, the first stage keyword detector 108, the system 100, the device 200, the device 300, the device 400, one or more other circuits or components configured to generate a signal indicating a keyword detection, or any combination thereof.

The apparatus also includes means for initiating a change of state based on the signal and prior to confirmation of the keyword detection, where the change of state enables a voice service that is in a low-power mode to be scheduled for execution on one or more reserved processor cores. For example, the means for initiating a change of state based on the signal and prior to confirmation of the keyword detection includes the always-on processor(s) 106, the first stage keyword detector 108, the application processor(s) 120, the second stage keyword detector 212, the system 100, the device 200, the device 300, the device 400, one or more other circuits or components configured to initiate a change of state based on the signal and prior to confirmation of the keyword detection, or any combination thereof.

In some aspects, in conjunction with the described implementations, an apparatus includes means for receiving an indication that a first stage keyword detector has detected a keyword. For example, the means for receiving an indication that a first stage keyword detector has detected a keyword includes the always-on processor(s) 106, the second stage keyword detector 212, the scheduler 112, the system 100, the device 200, the device 300, the device 400, one or more other circuits or components configured to receive an indication that a first stage keyword detector has detected a keyword, or any combination thereof.

The apparatus also includes means for managing assignment of processes to two or more cores, where the means for managing assignment of processes is configured to, based on the indication, schedule a process of a voice service that is in a low-power mode for execution on one or more reserved processor cores. For example, the means for managing assignment of processes to two or more cores includes the always-on processor(s) 106, the scheduler 112, the application processor(s) 120, the system 100, the device 200, the device 300, the device 400, one or more other circuits or components configured to manage assignment of processes to two or more cores, or any combination thereof.

In some aspects, in conjunction with the described implementations, an apparatus includes means for receiving an indication that a first stage keyword detector has detected a keyword. For example, the means for receiving an indication that a first stage keyword detector has detected a keyword includes the always-on processor(s) 106, the scheduler 112, the second stage keyword detector 212, the application processor(s) 120, the system 100, the device 200, the device 300, the device 400, one or more other circuits or components configured to receive an indication that a first stage keyword detector has detected a keyword, or any combination thereof.

The apparatus also includes means for managing assignment of processes to two or more cores, where the means for managing assignment of processes is configured to, based on the indication, elevate a priority assigned to a process of a voice service. For example, the means for managing assignment of processes includes the always-on processor(s) 106, the scheduler 112, the application processor(s) 120, the system 100, the device 200, the device 300, the device 400, one or more other circuits or components configured to manage assignment of processes, or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

In some aspects, in conjunction with the described implementations, an apparatus includes means for transitioning a processor from an idle state to a wake-up state upon the indication of keyword detection by the first stage keyword detector and prior to confirmation of the keyword detection. For example, the means for transitioning a processor from an idle state to a wake-up state includes the always-on processor(s) 106, the scheduler 112, the second stage keyword detector 212, the application processor(s) 120, the system 100, the device 200, the device 300, the device 400, one or more other circuits or components configured to transition a processor from an idle state to a wake-up state, or any combination thereof.

The apparatus also includes means for initiating a voice service upon the indication of keyword detection by the first stage keyword detector and prior to confirmation of the keyword detection. For example, the means for initiating a voice service includes the always-on processor(s) 106, the first stage keyword detector 108, the application processor(s) 120, the second stage keyword detector 212, the scheduler 112, the system 100, the device 200, the device 300, the device 400, one or more other circuits or components configured to initiate a voice service , or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

The apparatus also includes means for initiating a change of state of a scheduler upon the indication of keyword detection by the first stage keyword detector and prior to confirmation of the keyword detection, where the change of state elevates a priority assigned to a process of a voice service. For example, the means for initiating a change of state of a scheduler includes the always-on processor(s) 106, the first stage keyword detector 108, the application processor(s) 120, the scheduler 112, the second stage keyword detector 212, the system 100, the device 200, the device 300, the device 400, one or more other circuits or components configured to initiate a change of state of a scheduler , or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

The apparatus also includes means for initiating a change of state of a scheduler upon the indication of keyword detection by the first stage keyword detector and prior to confirmation of the keyword detection, where the change of state causes a process of a voice service to move from a background task to a foreground task. For example, the means for initiating a change of state of a scheduler includes the always-on processor(s) 106, the first stage keyword detector 108, the application processor(s) 120, the scheduler 112, the second stage keyword detector 212, the system 100, the device 200, the device 300, the device 400, one or more other circuits or components configured to initiate a change of state of a scheduler, or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

The apparatus also includes means for initiating a change of state of a scheduler upon the indication of keyword detection by the first stage keyword detector and prior to confirmation of the keyword detection, where the change of state enables a process of a voice service to be reassigned from a first core of two or more cores of a processor to a second core of the two or more cores, and where the second core is a higher performance core than the first core. For example, the means for initiating a change of state of a scheduler includes the always-on processor(s) 106, the first stage keyword detector 108, the application processor(s) 120, the scheduler 112, the second stage keyword detector 212, the system 100, the device 200, the device 300, the device 400, one or more other circuits or components configured to initiate a change of state of a scheduler , or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

The apparatus also includes means for initiating a change of state of a scheduler upon the indication of keyword detection by the first stage keyword detector and prior to confirmation of the keyword detection, where the change of state reassigns a process of a voice service from a first scheduling group to a second scheduling group, and where processes assigned to the second scheduling group are allowed to execute on at least one core of a processor on which processes assigned to the first scheduling group are not allowed to execute. For example, the means for initiating a change of state of a scheduler includes the always-on processor(s) 106, the first stage keyword detector 108, the application processor(s) 120, the scheduler 112, the second stage keyword detector 212, the system 100, the device 200, the device 300, the device 400, one or more other circuits or components configured to initiate a change of state of a scheduler , or any combination thereof.

In some aspects, in conjunction with the described implementations, an apparatus includes means for obtaining an indication of keyword detection by a first stage keyword detector. For example, the means for obtaining an indication of keyword detection by a first stage keyword detector includes the always-on processor(s) 106, the scheduler 112, the second stage keyword detector 212, the application processor(s) 120, the system 100, the device 200, the device 300, the device 400, one or more other circuits or components configured to obtain an indication of keyword detection by a first stage keyword detector, or any combination thereof.

The apparatus also includes means for initiating a change of state of a scheduler upon the indication of keyword detection by the first stage keyword detector and prior to confirmation of the keyword detection, where the change of state sets a scheduling parameter associated with a process of a voice service to allow the process to execute on a reserved core of a processor. For example, the means for initiating a change of state of a scheduler includes the always-on processor(s) 106, the first stage keyword detector 108, the application processor(s) 120, the scheduler 112, the second stage keyword detector 212, the system 100, the device 200, the device 300, the device 400, one or more other circuits or components configured to initiate a change of state of a scheduler , or any combination thereof.

Those of skill would further appreciate that the various illustrative logical blocks, configurations, modules, circuits, and algorithm steps described in connection with the implementations disclosed herein may be implemented as electronic hardware, computer software executed by a processor, or combinations of both. Various illustrative components, blocks, configurations, modules, circuits, and steps have been described above generally in terms of their functionality. Whether such functionality is implemented as hardware or processor executable instructions depends upon the particular application and design constraints imposed on the overall system. Skilled artisans may implement the described functionality in varying ways for each particular application, such implementation decisions are not to be interpreted as causing a departure from the scope of the present disclosure.

The steps of a method or algorithm described in connection with the implementations disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transient storage medium known in the art. An exemplary storage medium is coupled to the processor such that the processor may read information from, and write information to, the storage medium. In the alternative, the storage medium may be integral to the processor. The processor and the storage medium may reside in an application-specific integrated circuit (ASIC). The ASIC may reside in a computing device or a user terminal. In the alternative, the processor and the storage medium may reside as discrete components in a computing device or user terminal.

The previous description of the disclosed aspects is provided to enable a person skilled in the art to make or use the disclosed aspects. Various modifications to these aspects will be readily apparent to those skilled in the art, and the principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A device comprising:
a first stage keyword detector (108);
a second stage keyword detector (212) and
a processor configured to:
based on a signal indicating a keyword detection by the first stage keyword detector and prior to confirmation of the keyword detection by the second stage keyword detector, initiate (2104) a change of state to enable a voice service that is in a low-power mode to be scheduled for execution on one or more reserved processor cores,
wherein initiating the change of state includes binding the voice service and the second stage keyword detector such that scheduling privileges of the voice service are based on scheduling privileges of the second stage keyword detector, and wherein the voice service includes use of a speech recognition model.

2. The device of claim 1, wherein initiating the change of state includes elevating scheduling privileges of a second stage keyword detector that is configured to confirm the keyword detection.

3. The device of claim 2, wherein elevating the scheduling privileges of the second stage keyword detector includes changing a scheduling priority of the second stage keyword detector; or
wherein elevating the scheduling privileges of the second stage keyword detector includes changing a designation of the second stage keyword detector from a background application to a foreground application, wherein the processor is further configured to execute instructions to delay or inhibit generation of a user notification associated with changing the designation of the second stage keyword detector from the background application to the foreground application.

4. The device of claim 1, wherein initiating the change of state includes elevating scheduling privileges of the voice service.

5. The device of claim 4, wherein elevating the scheduling privileges of the voice service includes changing a scheduling priority of the voice service; or
wherein elevating the scheduling privileges of the voice service includes changing a designation of the voice service from a background application to a foreground application, wherein the processor is further configured to execute instructions to delay or inhibit generation of a user notification associated with changing the designation of the voice service from the background application to the foreground application.

6. The device of claim 1, wherein the first stage keyword detector corresponds to, includes, is included within, or is executed by a digital signal processor or a low-power integrated circuit, and wherein the one or more reserved processor cores are cores of one or more application processors.

7. The device of claim 1, wherein the processor is further configured to, based on a second stage keyword detector failing to confirm the keyword detection, reverse the change of state.

8. The device of claim 1, further comprising the one or more reserved processor cores and one or more additional processor cores.

9. The device of claim 8, further comprising a scheduler configured to assign processes to execute at particular processor cores based on scheduling groups of the processes, wherein the one or more additional processor cores are available for use by each scheduling group and the one or more reserved processor cores are not available for use by one or more of the scheduling groups; or
further comprising a scheduler that is configured to allow a first group of processes to execute at the one or more additional processor cores and to allow a second group of processes to execute at the one or more reserved processor cores, and wherein the second group of processes includes or corresponds to a subset of the first group of processes that have a priority level greater than or equal to a threshold priority level; or
further comprising a scheduler that is configured to allow foreground and background processes to execute at the one or more additional processor cores and to restrict background processes from executing at the one or more reserved processor cores.

10. The device of claim 1, further comprising one or more microphones configured to generate audio data and to provide the audio data to the first stage keyword detector, to a second stage keyword detector, to the voice service, or to any combination thereof; and/or
further comprising one or more sensors configured to generate context data and to provide the context data to the voice service based on the change of state; and/or
further comprising one or more output devices configured to provide a user notification indicating execution of the voice service.

11. The device of claim 1, wherein the voice service includes a voice assistant.

12. A method comprising:
generating (2102), by a first stage keyword detector (108), a signal indicating a keyword detection;
and
based on the signal indicating the keyword detection and prior to confirmation of the keyword detection by a second stage keyword detector (212), initiating (2104) a change of state to enable a voice service that is in a low-power mode to be scheduled for execution on one or more reserved processor cores,
wherein initiating the change of state includes binding the voice service and the second stage keyword detector such that scheduling privileges of the voice service are based on scheduling privileges of the second stage keyword detector, and wherein the voice service includes use of a speech recognition model.

13. A non-transitory computer-readable medium storing instructions that are executable by one or more processors to cause the one or more processors to:
obtain a signal indicating a keyword detection from a first stage keyword detector (108); and
based on the signal indicating the keyword detection and prior to confirmation of the keyword detection by the second stage keyword detector, initiate (2104) a change of state to enable a voice service that is in a low-power mode to be scheduled for execution on one or more reserved processor cores,
wherein initiating the change of state includes binding the voice service and the second stage keyword detector such that scheduling privileges of the voice service are based on scheduling privileges of the second stage keyword detector, and wherein the voice service includes use of a speech recognition model.

## Patentansprüche

1. Gerät, das Folgendes umfasst:
einen Erststufen-Schlüsselwortdetektor (108);
einen Zweitstufen-Schlüsselwortdetektor (212) und
einen Prozessor, konfiguriert zum:
Einleiten, auf der Basis eines Signals, das eine Schlüsselwortdetektion durch den Erststufen-Schlüsselwortdetektor anzeigt, und vor der Bestätigung der Schlüsselwortdetektion durch den Zweitstufen-Schlüsselwortdetektor (2104), einer Zustandsänderung, um einen Sprachdienst, der in einem Energiesparmodus ist, zur Ausführung auf einem oder mehreren reservierten Prozessorkernen einzuplanen,
wobei das Einleiten der Zustandsänderung das Binden des Sprachdienstes und des Zweitstufen-Schlüsselwortdetektor umfasst, so dass Planungsprivilegien des Sprachdienstes auf Planungsprivilegien des Zweitstufen-Schlüsselwortdetektor basieren, und wobei der Sprachdienst die Verwendung eines Spracherkennungsmodells umfasst.

2. Gerät nach Anspruch 1, wobei das Einleiten der Zustandsänderung das Erhöhen der Planungsprivilegien eines Zweitstufen-Schlüsselwortdetektors beinhaltet, der zum Bestätigen der Schlüsselwortdetektion konfiguriert ist.

3. Gerät nach Anspruch 2, wobei das Erhöhen der Planungsprivilegien des Zweitstufen-Schlüsselwortdetektors das Ändern einer Planungspriorität des Zweitstufen-Schlüsselwortdetektors beinhaltet; oder
wobei das Erhöhen der Planungsprivilegien des Zweitstufen-Schlüsselwortdetektors das Ändern einer Bezeichnung des Zweitstufen-Schlüsselwortdetektors von einer Hintergrundanwendung zu einer Vordergrundanwendung beinhaltet, wobei der Prozessor ferner zum Ausführen von Befehlen konfiguriert ist, um die Erzeugung einer mit dem Ändern der Bezeichnung des Zweitstufen-Schlüsselwortdetektors von der Hintergrundanwendung zur Vordergrundanwendung assoziierten Benutzerbenachrichtigung zu verzögern oder zu verhindern.

4. Gerät nach Anspruch **1,** wobei das Einleiten der Zustandsänderung das Erhöhen der Planungsprivilegien des Sprachdienstes beinhaltet.

5. Gerät nach Anspruch 4, wobei das Erhöhen der Planungsprivilegien des Sprachdienstes das Ändern einer Planungspriorität des Sprachdienstes beinhaltet; oder
wobei das Erhöhen der Planungsprivilegien des Sprachdienstes das Ändern einer Bezeichnung des Sprachdienstes von einer Hintergrundanwendung zu einer Vordergrundanwendung beinhaltet, wobei der Prozessor ferner zum Ausführen von Befehlen konfiguriert ist, um die Erzeugung einer mit dem Ändern der Bezeichnung des Sprachdienstes von der Hintergrundanwendung zur Vordergrundanwendung assoziierten Benutzerbenachrichtigung zu verzögern oder zu verhindern.

6. Gerät nach Anspruch 1, wobei der Erststufen-Schlüsselwortdetektor einem digitalen Signalprozessor oder einer integrierten Schaltung mit geringem Stromverbrauch entspricht, diese(n) umfasst, darin enthalten ist oder davon ausgeführt wird, und wobei die ein oder mehreren reservierten Prozessorkerne Kerne eines oder mehrerer Anwendungsprozessoren sind.

7. Gerät nach Anspruch 1, wobei der Prozessor ferner zum Umkehren der Zustandsänderung auf der Basis davon konfiguriert ist, dass der Zweitstufen-Schlüsselwortdetektor die Schlüsselwortdetektion nicht bestätigt.

8. Gerät nach Anspruch 1, das ferner die ein oder mehreren reservierten Prozessorkerne und einen oder mehrere zusätzliche Prozessorkerne umfasst.

9. Gerät nach Anspruch 8, das ferner einen Scheduler umfasst, der zum Zuweisen von Prozessen zur Ausführung auf bestimmten Prozessorkernen auf der Basis von Planungsgruppen der Prozesse konfiguriert ist, wobei die ein oder mehreren zusätzlichen Prozessorkerne für die Verwendung durch jede Planungsgruppe verfügbar sind und die ein oder mehreren reservierten Prozessorkerne nicht für die Verwendung durch eine oder mehrere der Planungsgruppen verfügbar sind; oder
das ferner einen Scheduler umfasst, konfiguriert zum Zulassen, dass eine erste Gruppe von Prozessen auf den ein oder mehreren zusätzlichen Prozessorkernen ausgeführt wird und eine zweite Gruppe von Prozessen auf den ein oder mehreren reservierten Prozessorkernen ausgeführt wird, und wobei die zweite Gruppe von Prozessen eine Teilmenge der ersten Gruppe von Prozessen enthält oder dieser entspricht, die eine Prioritätsstufe gleich einer oder größer als eine Schwellenprioritätsstufe aufweisen; oder
das ferner einen Scheduler umfasst, konfiguriert zum Zulassen, dass Vordergrund- und Hintergrundprozesse auf den ein oder mehreren zusätzlichen Prozessorkernen ausgeführt werden und Hintergrundprozesse auf den ein oder mehreren reservierten Prozessorkernen eingeschränkt werden.

10. Gerät nach Anspruch 1, das ferner ein oder mehrere Mikrofone umfasst, konfiguriert zum Erzeugen von Audiodaten und zum Zuführen der Audiodaten dem Erststufen-Schlüsselwortdetektor, einem Zweitstufen-Schlüsselwortdetektor, dem Sprachdienst oder einer beliebigen Kombination davon; und/oder
das ferner einen oder mehrere Sensoren umfasst, die zum Erzeugen von Kontextdaten und zum Zuführen der Kontextdaten dem Sprachdienst auf der Basis der Zustandsänderung konfiguriert sind; und/oder
das ferner ein oder mehrere Ausgabegeräte umfasst, die zum Bereitstellen einer die Ausführung des Sprachdienstes angebenden Benutzerbenachrichtigung konfiguriert sind.

11. Gerät nach Anspruch 1, wobei der Sprachdienst einen Sprachassistenten umfasst.

12. Verfahren, das Folgendes beinhaltet:
Erzeugen (2102), durch einen Erststufen-Schlüsselwortdetektor (108), eines Signals, das eine Schlüsselwortdetektion anzeigt;
und
Einleiten (2104), auf der Basis davon, dass das Signal die Schlüsselwortdetektion anzeigt, und vor der Bestätigung der Schlüsselwortdetektion durch einen Zweitstufen-Schlüsselwortdetektor (212), einer Zustandsänderung, um einen Sprachdienst, der in einem Energiesparmodus ist, zur Ausführung auf einem oder mehreren reservierten Prozessorkernen einzuplanen,
wobei das Einleiten der Zustandsänderung das Binden des Sprachdienstes und des Zweitstufen-Schlüsselwortdetektors umfasst, so dass Planungsprivilegien des Sprachdienstes auf Planungsprivilegien des Zweitstufen-Schlüsselwortdetektors basieren, und wobei der Sprachdienst die Verwendung eines Spracherkennungsmodells umfasst.

13. Nichtflüchtiges, computerlesbares Medium, das Befehle speichert, die von einem oder mehreren Prozessoren ausgeführt werden können, um die ein oder mehreren Prozessoren zu veranlassen zum:
Erhalten eines Signals, das eine Schlüsselwortdetektion anzeigt, von einem Erststufen-Schlüsselwortdetektor (108); und
Einleiten (2104), auf der Basis davon, dass das Signal die Schlüsselwortdetektion anzeigt, und vor der Bestätigung der Schlüsselwortdetektion durch einen Zweitstufen-Schlüsselwortdetektor (212), einer Zustandsänderung, um einen Sprachdienst, der in einem Energiesparmodus ist, zur Ausführung auf einem oder mehreren reservierten Prozessorkernen einzuplanen,
wobei das Einleiten der Zustandsänderung das Binden des Sprachdienstes und des Zweitstufen-Schlüsselwortdetektors umfasst, so dass Planungsprivilegien des Sprachdienstes auf Planungsprivilegien des Zweitstufen-Schlüsselwortdetektor basieren, und wobei der Sprachdienst die Verwendung eines Spracherkennungsmodells umfasst.

## Revendications

1. Dispositif comprenant :
un détecteur de mot-clé de première étape (108) ;
un détecteur de mot-clé de seconde étape (212) et
un processeur configuré pour :
sur la base d'un signal indiquant une détection de mot-clé par le détecteur de mot-clé de première étape et avant la confirmation de la détection de mot-clé par le détecteur de mot-clé de seconde étape, lancer (2104) un changement d'état pour permettre l'ordonnancement d'un service vocal qui est en mode basse puissance en vue de son exécution sur un ou plusieurs cœurs de processeur réservés,
dans lequel le lancement du changement d'état comporte la liaison du service vocal et du détecteur de mot-clé de seconde étape de telle sorte que des privilèges d'ordonnancement du service vocal soient basés sur des privilèges d'ordonnancement du détecteur de mot-clé de seconde étape, et dans lequel le service vocal comporte l'utilisation d'un modèle de reconnaissance vocale.

2. Dispositif selon la revendication 1, dans lequel le lancement du changement d'état comprend l'élévation de privilèges d'ordonnancement d'un détecteur de mot-clé de seconde étape configuré pour confirmer la détection de mot-clé.

3. Dispositif selon la revendication 2, dans lequel l'élévation des privilèges d'ordonnancement du détecteur de mot-clé de seconde étape comprend la modification d'une priorité d'ordonnancement du détecteur de mot-clé de seconde étape ; ou
dans lequel l'élévation des privilèges d'ordonnancement du détecteur de mot-clé de seconde étape comprend la modification de la désignation du détecteur de mot-clé de seconde étape d'une application d'arrière-plan à une application de premier plan, dans lequel le processeur est configuré en outre pour exécuter des instructions visant à retarder ou à inhiber la génération d'une notification d'utilisateur associée à la modification de la désignation du détecteur de mot-clé de seconde étape de l'application d'arrière-plan à l'application de premier plan.

4. Dispositif selon la revendication 1, dans lequel le lancement du changement d'état comprend l'élévation de privilèges d'ordonnancement du service vocal.

5. Dispositif selon la revendication 4, dans lequel l'élévation des privilèges d'ordonnancement du service vocal comprend la modification d'une priorité d'ordonnancement du service vocal ; ou
dans lequel l'élévation des privilèges d'ordonnancement du service vocal comprend la modification d'une désignation du service vocal d'une application d'arrière-plan à une application de premier plan, dans lequel le processeur est configuré en outre pour exécuter des instructions visant à retarder ou à inhiber la génération d'une notification d'utilisateur associée à la modification de la désignation du service vocal de l'application d'arrière-plan à l'application de premier plan.

6. Dispositif selon la revendication 1, dans lequel le détecteur de mot-clé de première étape correspond, comporte, est inclus dans ou est exécuté par un processeur de signal numérique ou un circuit intégré basse puissance, et dans lequel les un ou plusieurs cœurs de processeur réservés sont des cœurs d'un ou plusieurs processeurs d'application.

7. Dispositif selon la revendication 1, dans lequel le processeur est configuré en outre pour, en l'absence d'une confirmation par un détecteur de mot-clé de seconde étape de la détection de mot-clé, inverser le changement d'état.

8. Dispositif selon la revendication 1, comprenant en outre un ou plusieurs cœurs de processeur réservés et un ou plusieurs cœurs de processeur supplémentaires.

9. Dispositif selon la revendication 8, comprenant en outre un ordonnanceur configuré pour attribuer des processus à exécuter à des cœurs de processeur particuliers en fonction de groupes d'ordonnancement des processus, dans lequel les un ou plusieurs cœurs de processeur supplémentaires peuvent être utilisés par chaque groupe d'ordonnancement et les un ou plusieurs cœurs de processeur réservés ne peuvent pas être utilisés par un ou plusieurs des groupes d'ordonnancement ; ou
comprenant en outre un ordonnanceur configuré pour permettre l'exécution d'un premier groupe de processus au niveau des un ou plusieurs cœurs de processeur supplémentaires et permettre l'exécution d'un second groupe de processus au niveau des un ou plusieurs cœurs de processeur réservés, et dans lequel le second groupe de processus comporte ou correspond à un sous-ensemble du premier groupe de processus dont le niveau de priorité est supérieur ou égal à un niveau de priorité seuil ; ou
comprenant en outre un ordonnanceur configuré pour permettre l'exécution de processus de premier plan et d'arrière-plan au niveau des un ou plusieurs cœurs de processeur supplémentaires et restreindre l'exécution de processus d'arrière-plan au niveau des un ou plusieurs cœurs de processeur réservés.

10. Dispositif selon la revendication 1, comprenant en outre un ou plusieurs microphones configurés pour générer des données audio et fournir les données audio au détecteur de mot-clé de première étape, à un détecteur de mot-clé de seconde étape, au service vocal, ou à toute combinaison de ceux-ci ; et/ou
comprenant en outre un ou plusieurs capteurs configurés pour générer des données de contexte et fournir les données de contexte au service vocal en fonction du changement d'état ; et/ou
comprenant en outre un ou plusieurs dispositifs de sortie configurés pour fournir une notification d'utilisateur indiquant l'exécution du service vocal.

11. Dispositif selon la revendication 1, dans lequel le service vocal comprend un assistant vocal.

12. Procédé comprenant :
la génération (2102), par un détecteur de mot-clé de première étape (108), d'un signal indiquant une détection de mot-clé ; et
sur la base du signal indiquant la détection de mot-clé et avant la confirmation de la détection de mot-clé par un détecteur de mot-clé de seconde étape (212), le lancement (2104) d'un changement d'état pour permettre l'ordonnancement d'un service vocal qui se trouve en mode basse puissance en vue de son exécution sur un ou plusieurs cœurs de processeur réservés,
dans lequel le lancement du changement d'état comprend la liaison du service vocal et du détecteur de mot-clé de seconde étape de telle sorte que des privilèges d'ordonnancement du service vocal soient basés sur des privilèges d'ordonnancement du détecteur de mot-clé de seconde étape, et dans lequel le service vocal comporte l'utilisation d'un modèle de reconnaissance vocale.

13. Support non transitoire lisible par ordinateur stockant des instructions exécutables par un ou plusieurs processeurs pour amener les un ou plusieurs processeurs à :
obtenir un signal indiquant une détection de mot-clé à partir d'un détecteur de mot-clé de première étape (108) ; et
sur la base du signal indiquant la détection de mot-clé et avant la confirmation de la détection de mot-clé par le détecteur de mot-clé de seconde étape, lancer (2104) un changement d'état pour permettre l'ordonnancement d'un service vocal qui se trouve en mode basse puissance en vue de son exécution sur un ou plusieurs cœurs de processeur réservés,
dans lequel le lancement du changement d'état comporte la liaison du service vocal et du détecteur de mot-clé de seconde étape de telle sorte que des privilèges d'ordonnancement du service vocal soient basés sur des privilèges d'ordonnancement du détecteur de mot-clé de seconde étape, et dans lequel le service vocal comporte l'utilisation d'un modèle de reconnaissance vocale.
